# EUROPEAN PATENT SPECIFICATION

(11) **EP 0 728 769 B1**
(45) Date of publication and mention of the grant of the patent: **19.08.1998**
(21) Application number: 96102584.8
(22) Date of filing: 21.02.1996
(51) Int. Cl.: C08F 10/00, C08F 4/651, C08F 4/649

(54) **Components and catalysts for the polymerization of olefins**
Komponente und Katalysatore für die Olefinpolymerisation
Composants et catalyseurs pour la polymérisation d'oléfines

(30) Priority: 21.02.1995 IT MI950318; 21.02.1995 IT MI950317
(43) Date of publication of application: 28.08.1996
(73) Proprietor: MONTELL NORTH AMERICA INC., New Castle County Delaware (US)
(72) Inventor: Morini, Giampiero, I-27058 Voghera, Pavia (IT); Albizzati, Enrico, I-28041 Arona, Novara (IT); Balbontin, Giulio, I-44100 Ferrara (IT); Baruzzi, Giovanni, I-44100 Ferrara (IT); Cristofori, Antonio, I-45030 Occhiobello, Rovigo (IT)
(74) Representative: Zumstein, Fritz, Dr.

(56) References cited:
- EP-A- 0 362 705
- EP-A- 0 451 645

## Description

The present invention concerns catalysts for the polymerization of olefins, comprising particular 1,3-diethers.

Published European patent application n. 361 494 describes solid catalyst components comprising, as an internal electron-donor, an ether containing two or more ether groups, and having specific reaction characteristics toward the anhydrous magnesium chloride and TiCl₄.

The catalysts obtained from the reaction of said catalyst components with an Al-alkyl compound exhibit high activity and stereospecificity in the polymerization of olefins, and do not require the use of an external electron-donor.

It has now been found that by reacting an Al-alkyl compound with a solid catalyst component comprising magnesium dihalide in active form, a titanium compound and a 1,3-diether in which the carbon atom in position 2 belongs to a specific cyclic structure containing two or three unsaturations (cyclopolyenic structure), a catalyst is obtained which has uncommonly high catalytic activity and a high level of stereospecificity in the polymerization of olefins.

In fact, the above mentioned 1,3-diethers with a cyclopolyenic structure (hereinafter cyclopolyenic 1,3-diethers), which are not disclosed in published European patent application n. 361 494, confer to the above mentioned catalyst an activity considerably higher than the one obtained by using the ethers known in the art.

The addition of an external electron-donor to the above catalyst, containing the cyclopolyenic 1,3-diether as internal electron-donor, allows one to obtain very high levels of stereospecificity while maintaining high activity. Thus one obtains balances of activity and stereospecificity that cannot be reached with the ethers known in the art.

Published European patent application n. 362705 describes catalysts comprising the reaction product of a solid catalyst component comprising a titanium compound and an internal electron-donor supported on a magnesium dihalide in active form, an Al-alkyl compound, and, as an external electron-donor, an ether containing two or more ether groups and capable of forming complexes with anhydrous magnesium chloride, under standard conditions, in quantities lower than 60 mmoles per 100 g of magnesium chloride.

Said catalysts exhibit high activity and stereospecificity in the polymerization of olefins.

It has now been found that the performance of the above mentioned catalysts is improved when the previously said cyclopolyenic 1,3-diethers are used as the external electron-donors.

In fact, the catalysts obtained by using, as the external-electron donors, the above mentioned cyclopolyenic 1,3-diethers, which are not disclosed in published European patent application n. 362705, display, in the polymerization of olefins, very high balances of activity and stereospecificity not obtainable with the ethers known in the art.

Accordingly the present invention provides a solid catalyst component for the polymerization of olefins, said solid catalyst component comprising a magnesium halide in active form, and, supported thereon, a titanium compound containing at least one Ti-halogen bond and, as the internal electron-donor compound, a cyclopolyenic 1,3-diether in which only the carbon atom in position 2 belongs to a cyclic or polycyclic structure made up of 5, 6, or 7 carbon atoms, or of 5-n or 6-n' carbon atoms, and respectively n nitrogen atoms and n' heteroatoms selected from the group consisting of N, O, S and Si, where n is 1 or 2 and n' is 1, 2, or 3, said structure containing two or three unsaturations (cyclopolyenic structure), and optionally being condensed with other cyclic structures, or substituted with one or more substituents selected from the group consisting of linear or branched alkyl radicals; cycloalkyl, aryl, aralkyl, alkaryl radicals and halogens, or being condensed with other cyclic structures and substituted with one or more of the above mentioned substituents that can also be bonded to the condensed cyclic structures; one or more of the above mentioned alkyl, cycloalkyl, aryl, aralkyl, or alkaryl radicals and the condensed cyclic structures optionally containing one or more heteroatoms as substitutes for carbon or hydrogen atoms, or both.

According to another embodiment, the present invention provides a catalyst for the polymerization of olefins comprising the reaction product of:
a) a catalyst component as defined above;
b) an Al-alkyl compound, and optionally
c) an electron-donor compound.
According to another embodiment, the present invention provides a catalyst for the polymerization of olefins comprising the reaction product of an Al-alkyl compound and a cyclopolyenic 1,3-diether with a solid catalyst component a¹) comprising a magnesium halide in active form, and, supported thereon, a titanium compound containing at least one Ti-halogen bond and an electron-donor compound.

The catalyst component a) is a preferred example of ctalyst component a¹).

Preferably in the cyclopolyenic 1,3-diethers employed in preparing the catalyst component (a) the carbon atoms in positions 1 and 3 are secondary.

The above substituents in the cyclopolyenic 1,3-diethers are preferably selected from the group consisting of C₁-C₂₀ linear or branched alkyl radicals; C₃-C₂₀ cycloalkyl; C₆-C₂₀ aryl, C₇-C₂₀ aralkyl and C₇-C₂₀ alkaryl radicals; Cl and F.

The heteroatoms optionally present in the alkyl, cycloalkyl, aryl, aralkyl, alkaryl radicals and/or in the condensed cyclic structures are preferably selected from the group consisting of N; O; S; P; Si and halogens, in particular Cl and F.

Particularly preferred among the above cyclopolyenic 1,3-diethers are the compounds of the general formula: 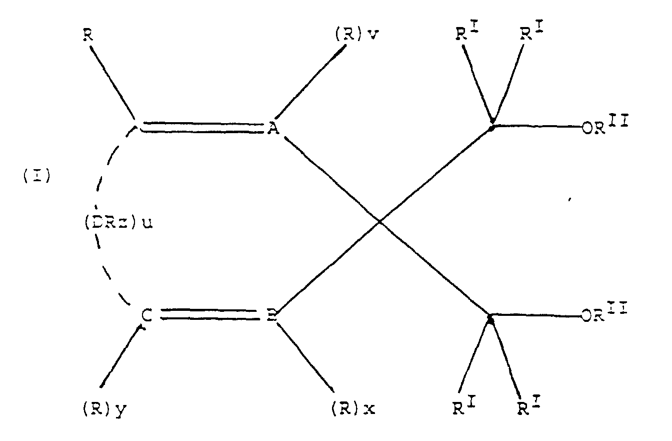 where A, B, C and D are carbon atoms or heteroatoms selected from the group consisting of N, O, S and Si; v, x and y are 0 or 1; u and z are 0 or 1 or 2;
provided that when u = 0:
i) A, B and C are carbon atoms and v, x and y are equal to 1; or
ii) A is a nitrogen atom, B and C are carbon atoms, v is equal to 0, and x and y are equal to 1; or
iii) A and B are nitrogen atoms, C is a carbon atom, v and x are equal to 0, and y is equal to 1; or
iv) A and B are carbon atoms, C is a nitrogen atom, v and x are equal to 1, and y is equal to 0;
when u = 1:
1) A, B, C and D are carbon atoms, v, x and y are equal to 1, and z is equal to 2; or
2) A and B are carbon atoms, C is a nitrogen atom, D is an oxygen atom, v and x are equal to 1, y and z are equal to 0; or
3) A, B and C are carbon atoms, D is an oxygen, nitrogen, sulfur, or silicon atom, v, x and y are equal to 1, and z is equal to 0 when D is an oxygen or sulfur atom, equal to 1 when D is a nitrogen atom, and equal to 2 when D is a silicon atom;
when u = 2:
A, B and C are carbon atoms, D represents two carbon atoms bonded to each other by a single or double bond, v, x and y are equal to 1, and z is equal to 1 when the couple of carbon atoms D is bonded by a double bond, and equal to 2 when said couple is bonded by a single bond;
radicals R and R^{I}, equal or different, are selected from the group consisting of hydrogen; halogens, preferably Cl and F;
C₁-C₂₀ alkyl radicals, linear or branched; C₃-C₂₀ cycloalkyl, C₆-C₂₀ aryl, C₇-C₂₀ alkaryl and C₇-C₂₀ aralkyl radicals; the R^{II} radicals, equal or different, are selected from the group consisting of C₁-C₂₀ alkyl radicals, linear or branched; C₃-C₂₀ cycloalkyl, C₆-C₂₀ aryl, C₇-C₂₀ alkaryl and C₇-C₂₀ aralkyl radicals, and two or more of the R radicals can be bonded to each other to form condensed cyclic structures, saturated or unsaturated, optionally substituted with R^{III} radicals selected from the group consisting of halogens, preferably Cl and F; C₁-C₂₀ alkyl radicals, linear or branched; C₃-C₂₀ cycloalkyl, C₆-C₂₀ aryl, C₇-C₂₀ alkaryl and C₇-C₂₀ aralkyl radicals; said radicals from R to R^{III} optionally containing one or more heteroatoms as substitutes for carbon or hydrogen atoms, or both.

Preferably, in the cyclopolyenic 1,3-diethers employed in preparing the catalyst component a) all the R^{I} radicals in the compounds of formula (I) are hydrogen, and the two R^{II} radicals are methyl.

The heteroatoms optionally present in the radicals from R to R^{III} are preferably selected from the group consisting of N; O; S; P; Si and halogens, in particular Cl and F.

A more restricted class of the compounds of formula (I) is constituted by the compounds of the general formula: 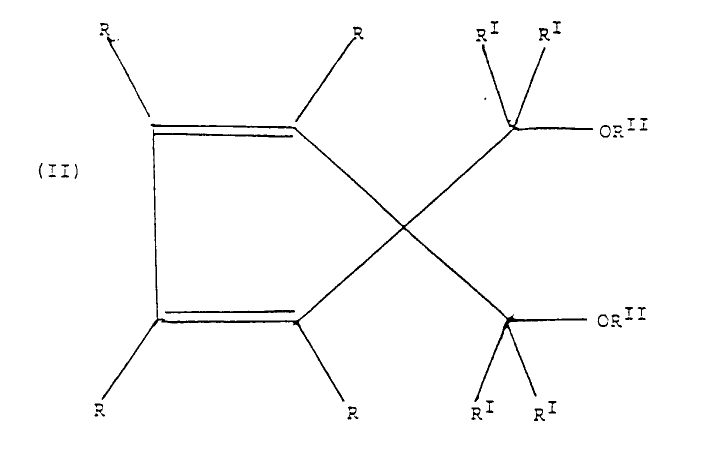 where the radicals from R to R^{II} have the meaning defined above for formula (I), including the preferred cases.

In particular, two or more of the R radicals can be bonded to each other to form one or more condensed cyclic structures, preferably benzenic, optionally substituted by R^{III} radicals.

Specially preferred are the compounds of formula: 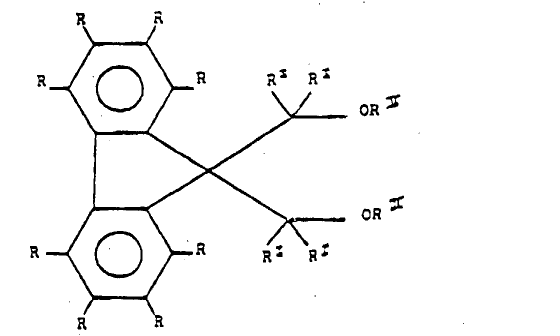 where the R radicals, equal or different, are hydrogen; halogens, preferably Cl and F; C₁-C₂₀ alkyl radicals, linear or branched; C₃-C₂₀ cycloalkyl, C₆-C₂₀ aryl, C₇-C₂₀ alkylaryl and C₇-C₂₀ aralkyl radicals, optionally containing one or more heteroatoms selected from the group consisting of N, O, S, P, Si and halogens, in particular Cl and F, as substitutes for carbon or hydrogen atoms, or both; the radicals and R^{II} R^{I} are as defined above for formula (I).

Specific examples of compounds comprised in formula (II) are:
1,1-bis(methoxymethyl)-cyclopentadiene;
1,1-bis(methoxymethyl)-2,3,4,5-tetramethylcyclopentadiene;
1,1-bis(methoxymethyl)-2,3,4,5-tetraphenylcyclopentadiene;
1,1-bis(methoxymethyl)-2,3,4,5-tetrafluorocyclopentadiene;
1,1-bis(methoxymethyl)-3,4-dicyclopentylcyclopentadiene;
1,1-bis(methoxymethyl)indene;
1,1-bis(methoxymethyl)-2,3-dimethylindene;
1,1-bis(methoxymethyl)-4,5,6,7-tetrahydroindene;
1,1-bis(methoxymethyl)-2,3,6,7-tetrafluoroindene;
1,1-bis(methoxymethyl)-4,7-dimethylindene;
1,1-bis(methoxymethyl)-3,6-dimethylindene;
1,1-bis(methoxymethyl)-4-phenylindene;
1,1-bis(methoxymethyl)-4-phenyl-2-methylindene;
1,1-bis(methoxymethyl)-4-cyclohexylindene;
1,1-bis(methoxymethyl)-7-(3,3,3-trifluoropropyl)indene;
1,1-bis(methoxymethyl)-7-trimethylsilylindene;
1,1-bis(methoxymethyl)-7-trifluoromethylindene;
1,1-bis(methoxymethyl)-4,7-dimethyl-4,5,6,7-tetrahydroindene;
1,1-bis(methoxymethyl)-7-methylindene;
1,1-bis(methoxymethyl)-7-cyclopenthylindene;
1,1-bis(methoxymethyl)-7-isopropylindene;
1,1-bis(methoxymethyl)-7-cyclohexylindene;
1,1-bis(methoxymethyl)-7-tert-butylindene;
1,1-bis(methoxymethyl)-7-tert-butyl-2-methylindene;
1,1-bis(methoxymethyl)-7-phenylindene;
1,1-bis(methoxymethyl)-2-phenylindene;
1,1-bis(methoxymethyl)-1H-benz[e]indene;
1,1-bis(methoxymethyl)-1H-2-methylbenz[e]indene;
9,9-bis(methoxymethyl)fluorene;
9,9-bis(methoxymethyl)-2,3,6,7-tetramethylfluorene;
9,9-bis(methoxymethyl)-2,3,4,5,6,7-hexafluorofluorene;
9,9-bis(methoxymethyl)-2,3-benzofluorene;
9,9-bis(methoxymethyl)-2,3,6,7-dibenzofluorene;
9,9-bis(methoxymethyl)-2,7-diisopropylfluorene;
9,9-bis(methoxymethyl)-1,8-dichlorofluorene;
9,9-bis(methoxymethyl)-2,7-dicyclopentylfluorene;
9,9-bis(methoxymethyl)-1,8-difluorofluorene;
9,9-bis(methoxymethyl)-1,2,3,4-tetrahydrofluorene;
9,9-bis(methoxymethyl)-1,2,3,4,5,6,7,8-octahydrofluorene;
9,9-bis(methoxymethyl)-4-tert-butylfluorene.

Other examples of cyclopolyenic 1,3-diethers comprised in the definitions above are:
1,1-bis(1'-butoxyethyl)-cyclopentadiene;
1,1-bis(1'-isopropoxy-n.propyl)cyclopentadiene;
1-methoxymethyl-1-(1'-methoxyethyl)-2,3,4,5-tetramethylcyclopentadiene;
1,1-bis(α-metoxybenzyl)indene;
1,1-bis(phenoxymethyl)indene;
1,1-bis(1'-methoxyethyl)-5,6-dichloroindene;
1,1-bis(phenoxymethyl)-3,6-dicyclohexylindene;
1-methoxymethyl-1-(1'-methoxyethyl)-7-tert-butylindene;
1,1-bis[2-(2'methoxypropyl)]-2-methylindene;
3,3-bis(methoxymethyl)-3H-2-methylbenz[e]indene;
9,9-bis(α-methoxybenzyl)fluorene;
9,9-bis(1'-isopropoxy-n.butyl)-4,5-diphenylfluorene;
9,9-bis(1'-methoxyethyl)fluorene;
9-(methoxymethyl)-9-(1'-methoxyethyl)-2,3,6,7-tetrafluorofluorene;
9-methoxymethyl-9-pentoxymethylfluorene;
9-methoxymethyl-9-ethoxymethylfluorene;
9-methoxymethyl-9-(l'methoxyethyl)-fluorene;
9-methoxymethyl-9-[2-(2-methoxypropyl)]-fluorene;
1,1-bis(methoxymethyl)-2,5-cyclohexadiene;
1,1-bis(methoxymethyl)benzonaphthene;
7,7-bis(methoxymethyl)2,5-norbornadiene;
9,9-bis(methoxymethyl)-1,4-methanedihydronaphthalene;
4,4-bis(methoxymethyl)-4H-cyclopenta[d,e,f]phenanthrene;
9,9-bis(methoxymethyl)9,10-dihydroanthracene;
7,7-bis(methoxymethyl)-7H-benz[d,e]anthracene;
1,1-bis(methoxymethyl)1,2-dihydronaphthalene;
4,4-bis(methoxymethyl)-1-phenyl-3,4-dihydronaphthalene;
4,4-bis(methoxymethyl)-1-phenyl-1,4-dihydronaphthalene;
5,5-bis(methoxymethyl)-1,3,6-cycloheptatriene;
5,5-bis(methoxymethyl)-10,11-dihydro-5H-dibenzo[a,d] cycloheptene;
5,5-bis(methoxymethyl)-5H-dibenzo[a,d]cycloheptene;
9,9-bis(methoxymethyl)xanthene;
9,9-bis(methoxymethyl)-2,3,6,7-tetramethylxanthene;
9,9-bis(1'methoxyisobutyl)thioxanthene;
4,4-bis(methoxymethyl-1,4-pyran;
9,9-bis(methoxymethyl)-N-tert-butyl-9,10-dihydroacridine;
4,4-bis(methoxymethyl)-1,4-chromene;
4,4-bis(methoxymethyl)-1,2,4-oxazine;
1,1-bis(methoxymethyl)benzo-2,3,1-oxazine;
5,5-bis(methoxymethyl)-1,5-pyrindine;
5,5-bis(methoxymethyl)-6,7-dimethyl-1,5-pyrindine;
2,2-bis(methoxymethyl)-3,4,5-trifluoroisopyrrole;
4,4-bis(1'methoxyethyl)benzo-N-phenyl-1,4-dihydropyridine.

The cyclopolyenic 1,3-diethers according to the present invention can be prepared by first synthesizing the cyclopolyendimethylol by way of reaction of the desired cyclopolyene with paraformaldehyde in the presence of sodium alcoholate (as described by B. WESSLEN, ACTA CHEM.SCAND.21 (1967)718-20), and then transforming the dimethylol derivative into the corresponding diether by way of alkylation, cycloalkylation, or arylation, according to known techniques, such as by reaction of the dimethylol derivative with an alkyl, cycloalkyl, or aryl halide in the presence of a strong base, such as NaH, in proper solvent, such as tetrahydrofurane.

The electron-donor compound present in the solid catalyst component a¹) can be a Lewis base containing one or more electronegative groups where the electron-donor atoms are selected from the group consisting of N, O, S, P, As or Sn. Examples of the above mentioned electron-donor compounds are widely described in the art. Preferred are the electron-donor compounds that can be extracted with Al-triethyl from the catalyst component a¹) for at least 70% in moles, the surface area (B.E.T.) of the solid product of extraction being at least 20 m²/g, and generally ranging from 100 to 300 m²/g.

Examples of the above mentioned electron-donor compounds are described in USP 4.522.930, and comprise ethers, ketones, lactones, compounds containing N, P, and/or S atoms, and specific types of esters.

In addition to the esters of USP N. 4.522.930, the esters described in European patent n. 045977 can be used.

Particularly suited are the phthalic acid esters such as diisobutyl, dioctyl and diphenyl phthalate, benzyl-butyl phthalate; the malonic acid esters such as diisobutyl and diethyl malonate; the alkyl and aryl pivalates; the alkyl, cycloalkyl, and aryl maleates; the alkyl and aryl carbonates such as diisobutyl carbonate, ethyl-phenyl carbonate and diphenyl carbonate; the succinic acid esters such as mono and diethyl succinate. Preferred are the phthalic acid esters.

Also useful in the catalyst component a¹) are the electron-donor compounds described in published European patent application n. 361494.

Said compounds are ethers that contain two or more ether groups, and that, under standard conditions, are capable of forming complexes with anhydrous magnesium chloride for less that 60 mmoles per 100 g of chloride and with TiCl₄ they do not undergo substitution reactions, or they only do so for less than 50% in moles.

The tests that allow the verification of the above reactivity criteria are reported below.

### Complexing test of the ethers with MgCl₂

In a 100 ml glass flask with fixed blades mechanical stirrer are introduced under nitrogen atmosphere in order:
- 70 ml of anhydrous n-heptane
- 12 mmoles of anhydrous MgCl₂ activated as described below
- 2 mmoles of ether.

The content is allowed to react at 60°C for 4 hours (stirring speed at 400 rpm). It is then filtered and washed at ambient temperature with 100 ml of n-heptane after which it is dried with a mechanical pump.

The solid is characterized, after having been treated with 100 ml of ethanol, by way of a gaschromatographic quantitative analysis for the analysis of the quantity of ether fixed.

### Test of the reaction with TiCl₄.

In a 25 ml test-tube with a magnetic stirrer and under nitrogen atmosphere are introduced:
- 10 ml of anhydrous n-heptane
- 5 mmoles of TiCl₄
- 1 mmole of donor

The content is allowed to react at 70°C for 30 minutes, after which it is cooled to 25°C and decomposed with 90 ml of ethanol.

The solutions obtained are analyzed by way of gaschromatography using the internal standard method, with an HRGC 5300 Mega Series Carlo Erba gaschromatograph with a 25 meters chrompack CP-SIL 5 CB capillary column.

The magnesium chloride used in the complexing test with the ethers is prepared as follows.

In a 1 liter vibrating mill jar (Vibratom from Siebtechnik) containing 1.8 Kg of steel spheres 16 mm in diameter, are introduced under nitrogen atmosphere 50 g of anhydrous MgCl₂ and 6.8 ml of 1,2-dichloroethane (DCE).

The content is milled at room temperature for 96 hours, after which the solid recovered is kept under vacuum in the mechanical pump for 16 hours at 50°C.

Characterization of the solid:
- half-peak breadth of the reflection D110 = 1.15 cm.
- Presence of a halo with maximum intensity at 2θ = 32.1°
- Surface area (B.E.T.) = 125 m²/g
- residual DCE = 2.5% by weight.

Examples of ethers having the features indicated above are the 1,3-diethers of formula 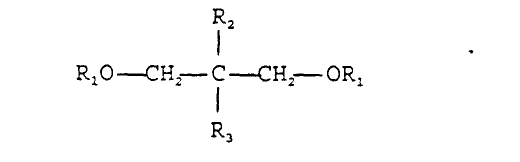 where R₁, R₂ and R₃ are the same or different and are linear or branched C₁-C₁₈ alkyl, C₃-C₁₈ cycloalkyl, C₆-C₁₈ aryl, C₇-C₁₈ aralkyl or alkaryl radicals, and R₂ or R₃ can also be a hydrogen atom.

Preferably, R₁ is a 1-6 carbon alkyl radical, and more particularly a methyl. Moreover, when R₂ is methyl, ethyl, propyl, or isopropyl, R₃ can be ethyl, propyl, isopropyl, butyl, isobutyl, tert-butyl, 2-ethylhexyl, cyclopenthyl, cyclohexyl, methylcyclohexyl, phenyl or benzyl; when R₂ is hydrogen, R₃ can be ethyl, butyl, sec.butyl, tert-butyl, 2-ethylhexyl, cyclohexylethyl, diphenylmethyl, p-chlorophenyl, 1-naphthyl, 1-decahydronaphthyl; R₂ and R₃ can also be the same and can be ethyl, propyl, isopropyl, butyl, isobutyl, tert-butyl, neopentyl, phenyl, benzyl, cyclohexyl, cyclopentyl.

Specific examples of ethers that can be advantageously used include: 2-(2-ethylhexyl)1,3-dimethoxypropane, 2-isopropyl-1,3-dimethoxypropane,2-butyl-1,3-dimethoxypropane, 2-sec-butyl-1,3-dimethoxypropane, 2-cyclohexyl-1,3-dimethoxypropane, 2-phenyl-1,3-dimethoxypropane, 2-tert-butyl-1,3-dimethoxypropane, 2-cumyl-1,3-dimethoxypropane, 2-(2-phenylethyl)-1,3-dimethoxypropane, 2-(2-cyclohexylethyl)-1,3-dimethoxypropane, 2-(p-chlorophenyl)-1,3-dimethoxypropane, 2-(diphenylmethyl)-1,3-dimethoxypropane, 2(1-naphthyl)-1,3-dimethoxypropane, 2 (p-fluorophenyl)-1,3-dimethoxypropane, 2(1-decahydronaphthyl)-1,3-dimethoxypropane, 2(p-tert-butylphenyl)-1,3-dimethoxypropane, 2,2-dicyclohexyl-1,3-dimethoxypropane, 2,2-diethyl-1,3-dimethoxypropane, 2,2-dipropyl-1,3-dimethoxypropane, 2,2-dibutyl-1,3-dimethoxypropane, 2,2-diethyl-1,3-diethoxypropane, 2,2-dicyclopentyl-1,3-dimethoxypropane, 2,2-dipropyl-1,3-diethoxypropane, 2,2-dibutyl-1,3-diethoxypropane, 2-methyl-2-ethyl-1,3-dimethoxypropane, 2-methyl-2-propyl-1,3-dimethoxypropane, 2-methyl-2-benzyl-1,3-dimethoxypropane, 2-methyl-2-phenyl-1,3-dimethoxypropane, 2-methyl-2-cyclohexyl-1,3-dimethoxypropane, 2-methyl-2-methylcyclohexyl-1,3-dimethoxypropane, 2,2-bis(p-chlorophenyl)-1,3-dimethoxypropane, 2,2-bis(2-phenylethyl)-1,3-dimethoxypropane, 2,2-bis(2-cyclohexylethyl)-1,3-dimethoxypropane, 2-methyl-2-isobutyl-1,3-dimethoxypropane, 2-methyl-2-(2-ethylhexyl)-1,3-dimethoxypropane, 2,2-bis(2-ethylhexyl)-1,3-dimethoxypropane, 2,2-bis(p-methylphenyl)-1,3-dimethoxypropane, 2-methyl-2-isopropyl-1,3-dimethoxypropane, 2,2-diisobutyl-1,3-dimethoxypropane, 2,2-diphenyl-1,3-dimethoxypropane, 2,2-dibenzyl-1,3-dimethoxypropane, 2-isopropyl-2-cyclopentyl-1,3-dimethoxypropane, 2,2-bis(cyclohexylmethyl)-1,3-dimethoxypropane, 2,2-diisobutyl-1,3-diethoxypropane, 2,2-diisobutyl-1,3-dibuthoxypropane, 2-isobutyl-2-isopropyl-1,3-dimetoxypropane, 2,2-di-sec-butyl-1,3-dimetoxypropane, 2,2-di-tert-butyl-1,3-dimetoxypropane, 2,2-dineopentyl-1,3-dimetoxypropane, 2-isopropyl-2-isopentyl-1,3-dimetoxypropane, 2-phenyl-2-benzyl-1,3-dimetoxypropane, 2-cyclohexyl-2-cyclohexylmethyl-1,3-dimethoxypropane.

The preparation of the solid catalyst components a) and a¹) can be carried out using various methods.

For example, the magnesium halide (used anhydrous, containing less than 1% of water), the titanium compound, and the electron-donor compound are milled together under conditions that cause the activation of the magnesium halide; the milled product is then caused to react one or more times with TiCl₄ in excess, optionally in the presence of an electron-donor, at a temperature ranging from 80 to 135°C, and then repeatedly washed with a hydrocarbon (such as hexane, for example) until no chlorine ions can be detected in the wash liquid.

According to another method the anhydrous magnesium halide is preactivated according to known methods and then reacted with an excess of TiCl₄ containing the electron-donor compound and optionally an aliphatic, cycloaliphatic, aromatic or chlorinated hydrocarbon solvent (for example: hexane, heptane, cyclohexane, toluene, ethylbenzene, chlorobenzene, dichloroethane). In this case also the operation takes place at a temperature between 80° and 135°C. The reaction with TiCl₄, in the presence or absence of an electron-donor, is optionally repeated and the solid is then washed with hexane to eliminate the nonreacted TiCl₄.

According to another method, a MgCl₂.nROH adduct (particularly in the form of spheroidal particles) where n is generally from 1 to 3, and ROH is an alcohol, such as ethanol, butanol, isobutanol for example, is caused to react with an excess of TiCl₄ containing the electron-donor compound and optionally one of the above mentioned hydrocarbon solvents. The reaction temperature initially is from 0 to 25°C, and is then increased to 80-135°C. After reaction, the solid is reacted once more with TiCl₄, in the presence or absence of the electron-donor, then separated and washed with a hydrocarbon until no chlorine ions can be detected in the wash liquid.

According to yet another method, magnesium alcoholates and chloroalcoholates (the chloroalcoholates can be prepared particularly as described in USP n. 4.220.554) are caused to react with TiCl₄ in excess containing the electron-donor compound, operating under the reaction conditions already described.

According to another method, complexes of magnesium halides with titanium alcoholates (the MgCl₂.2Ti(OC₄H₉)₄ complex is a typical example) are caused to react, in a hydrocarbon solution, with TiCl₄ in excess containing the electron-donor compound; the separated solid product is reacted again with an excess of TiCl₄, in the presence or absence of electron-donor, and then separated and washed with hexane. The reaction with TiCl₄ is carried out at a temperature ranging from 80° to 130°C.

According to a variance, the MgCl₂ and titanium alcoholate complex is caused to react in a hydrocarbon solution with polyhydrosiloxane; the separated solid product is reacted at 50°C with silicon tetrachloride containing the electron-donor compound; the solid is then reacted with TiCl₄ in excess, in the presence or absence of electron-donor, operating at 80°-130°C.

Independently from the specific preparation method, after the last reaction with TiCl₄ in the presence of the electron-donor, it is preferable to separate the solid obtained (by way of filtration, for example), and cause it to react with an excess of TiCl₄ at temperatures ranging from 80 to 135°C, before washing it with the hydrocarbon solvent.

Finally, it is possible to cause to react TiCl₄ in excess and containing the electron-donor with porous resins such as partially cross-linked styrene-divinylbenzene in spherical particle form, or porous inorganic oxides such as silica and alumina, impregnated with solutions of magnesium compounds or complexes soluble in organic solvents.

The porous resins which can be used are described in published European patent application 344755.

The reaction with TiCl₄ is carried out at 80-100°C. After separating the excess TiCl₄, the reaction is repeated and the solid is then washed with a hydrocarbon.

The MgCl₂/electron-donor molar ratio used in the reactions indicated above generally ranges from 4:1 to 12:1.

The electron-donor compound is fixed on the magnesium halide in a quantity generally ranging from 1 to 20% molar.

In particular, the cyclopolyenic 1,3-diether is fixed on the magnesium halide in a quantity generally ranging from 5 to 20% molar.

In the solid catalyst components a) and a¹) the Mg/Ti ratio is generally from 30:1 to 4:1; in the components supported on resins or on inorganic oxides the ratio can be different and usually ranges from 20:1 to 2:1.

The titanium compounds that can be used for the preparation of catalyst components a) and a¹) are the halides and halogen alcoholates. The titanium tetrachloride is the preferred compound. Satisfactory results can also be obtained with the trihalides, particularly TiCl₃ HR, TiCl₃ ARA, and with the halogen alcoholates such as TiCl₃ OR, where R is a phenyl radical, for example.

The above reactions cause the formation of magnesium halide in active form. In addition to these reactions, other reactions are known in the literature that bring to the formation of magnesium halide in active form starting from magnesium compounds different from the halides.

The active form of the magnesium halides present in the catalyst components of the invention is recognizable by the fact that in the X-rays spectrum of the catalyst component the major intensity reflection which appears in the spectrum of the nonactivated magnesium halides (having surface area smaller than 3 m²/g) is no longer present, but in its place there is a halo with the position of the maximum intensity shifted with respect to the position of the major intensity reflection, or by the fact that the major intensity reflection presents a half-peak breadth at least 30% greater that the one of the corresponding reflection of the nonactivated Mg halide. The most active forms are those in which the halo appears in the X-ray spectrum of the solid catalyst component.

Among the magnesium halides, the chloride is the preferred compound. In the case of the most active forms of the magnesium chloride, the halo appears in place of the reflection which in the spectrum of the nonactivated magnesium chloride is situated at the interplanar distance of 2.56 Å.

The catalyst components a) and a¹) form, by reaction with the Al-alkyl compounds, catalysts which can be used in the polymerization of CH₂ = CHR olefins, where R is hydrogen or a 1-6 carbon alkyl radical, or an aryl radical, or mixtures of said olefins or of said olefins and diolefins.

However the present invention requires the use of an external electron-donor with the catalyst component a¹), at least when the latter is different from the catalyst component a).

The Al-alkyl compounds comprise Al-trialkyls such as Al-triethyl, Al-triisobutyl, Al-tri-n-butyl, Al-trioctyl. One can also use linear or cyclic Al-alkyl compounds containing one or more Al atoms bonded to one another with O, N, or S atoms.

Examples of said compounds are:

(C₂H₅)₂Al―O―Al(C₂H₅)₂

(i-C₄H₉)₂Al-O-Al(i-C₄H₉)₂

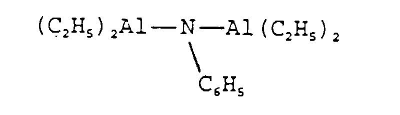

(C₂H₅)₂Al―SO₂―Al(C₂H₅)₂

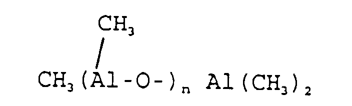

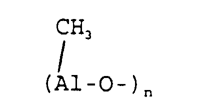

where n is a number from 1 to 20; AlR₂OR' compounds where R' is a C₆-C₂₀ aryl radical substituted at position 2 and/or 6, and R is a C₁-C₆ alkyl radical, and AlR₂H compounds where R is a C₁-C₆ alkyl radical.

The Al-Alkyl compound is used in Al/Ti ratios generally ranging from 1 to 1000.

The trialkyl compounds can also be used in blends with Al-alkyl halides such as AlEt₂Cl and AlEt_{3/2}Cl_{3/2}.

The polymerization of the olefins is carried out according to known methods operating in liquid phase constituted by one or more monomers, or by a solution of one or more monomers in an aliphatic or aromatic hydrocarbon solvent, or in gas phase, or also by combining polymerization stages in liquid phase and in gas phase.

The (co)polymerization temperature is usually from 0° to 150°C; particularly from 60° to 100°C. The operation occurs at atmospheric pressure or higher.

The catalysts can be precontacted with small quantities of olefins (prepolymerization). The prepolymerization improves the performance of the catalysts as well as the morphology of the polymers.

The prepolymerization is carried out maintaining the catalysts in suspension in a hydrocarbon solvent (hexane or heptane, for example), adding an olefin, and operating at temperatures ranging from room temperature to 60°C producing a quantity of polymer generally from 0.5 to 3 times the weight of the catalyst. It can also be carried out in liquid monomer, under the temperature conditions indicated above, and producing quantities of polymer which can reach 1000 g per g of catalytic component.

When the catalyst component a) is to be employed in the stereoregular polymerization of olefins, propylene in particular, an external electron-donor can be added to the Al-alkyl, said external electron-donor compound being preferably selected from the group consisting of silicon compounds containing at least one Si-OR bond (R = hydrocarbon radical); 2,2,6,6-tetramethylpiperidine; 2,6-diisopropylpiperidine; carboxylic acid esters, such as ethylparatoluate and ethylbenzoate, and di- and polyethers.

Preferably the silicon compounds have the formula R⁴ₙSi(OR⁵)₄₋ₙ where n is 1 or 2, the R⁴ radical or radicals, same or different, are C₁-C₁₂ alkyl, C₃-C₁₂ cycloalkyl, C₆-C₁₂ aryl, C₇-C₁₂ alkaryl or aralkyl radicals, 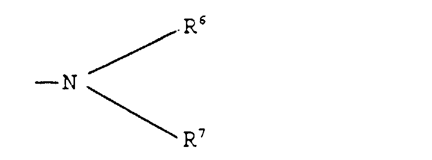 radicals, where R⁶ and R⁷ are the same or different and have the same meaning defined above for R⁴, or are bonded to each other to form a cyclic structure; the R⁵ radicals are the same or different and are C₁-C₆ alkyl radicals.

Optionally the R⁴ to R⁷ radicals can contain one or more halogens, in particular Cl and F, as substitutes for hydrogen atoms.

Examples of said compounds are:
(tert-butyl)₂ Si(OCH₃)₂;
(cyclohexyl)₂ Si(OCH₃)₂;
(isopropyl)₂ Si(OCH₃)₂;
(sec-butyl)₂ Si(OCH₃)₂;
(cyclohexyl) (methyl) Si(OCH₃)₂;
(cyclopentyl)₂ Si(OCH₃)₂;
(isopropyl) (methyl) Si(OCH₃)₂;
(n-butyl)₂ Si(OCH₃)₂;
(isobutyl)₂ Si(OCH₃)₂;
(sec-butyl)₂ Si(OCH₃)₂;
(tert-butyl) (methyl) Si(OCH₃)₂;
(tert-amyl) (methyl) Si(OCH₃)₂;
(tert-hexyl) (methyl) Si(OCH₃)₂;
(2-norbornyl) (methyl) Si(OCH₃)₂;
(tert-butyl) (cyclopentyl) Si(OCH₃)₂;
(2-norbornyl) (cyclopentyl) Si(OCH₃)₂;
(tert-butyl) Si(OCH₃)₃;
(tert-butyl) Si(OC₂H₅)₃;
(2-norbornyl) Si(OCH₃)₃;
(2-norbornyl) Si(OC₂H₅)₃;
(tert-hexyl) Si(OCH₃)₃;
(tert-hexyl) Si(OC₂H₅)₃;
(tert-butyl) (2-methylpiperidyl) Si(OCH₃)₂;
(tert-butyl) (3-methylpiperidyl) Si(OCH₃)₂;
(tert-butyl) (4-methylpiperidyl) Si(OCH₃)₂;
(tert-hexyl) (piperidyl) Si(OCH₃)₂;
(tert-hexyl) (pyrrolidinyl) Si(OCH₃)₂;
(methyl) (3,3,3-trifluoropropyl) Si(OCH₃)₂;
(isopropyl) (3,3,3-trifluoropropyl) Si(OCH₃)₂;
(n-butyl) (3,3,3-trifluoropropyl) Si(OCH₃)₂;
(isobutyl) (3,3,3-trifluoropropyl) Si(OCH₃)₂;
(sec-butyl) (3,3,3-trifluoropropyl) Si(OCH₃)₂;
(tert-butyl) (3,3,3-trifluoropropyl) Si(OCH₃)₂;
(3,3,3-trifluoropropyl) (piperidyl) Si(OCH₃)₂;
(3,3,3-trifluoropropyl) (2-methylpiperidyl) Si(OCH₃)₂;
(3,3,3-trifluoropropyl) (2-ethylpiperidyl) Si(OCH₃)₂;
(3,3,3-trifluoropropyl) (3-methylpiperidyl) Si(OCH₃)₂;
(3,3,3-trifluoropropyl) (4-methylpiperidyl) Si(OCH₃)₂;
(3,3,3-trifluoropropyl)₂ Si(OCH₃)₂.

Examples of preferred diethers that can be used as external electron-donors with the catalyst component a) are the compounds of the general formula 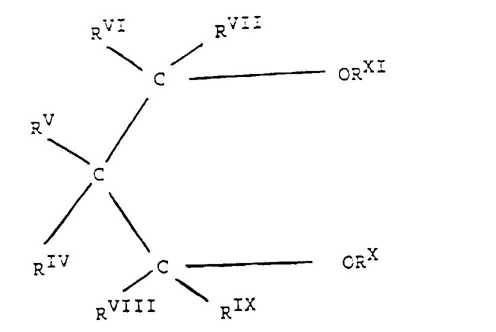 where R^{IV}, R^{V}, R^{VI}, R^{VII}_{,} R^{VIII} and R^{IX} are the same or different, and are hydrogen; linear or branched C₁-C₁₈ alkyl radicals, C₃-C₁₈ cycloalkyl, C₆-C₁₈ aryl, C₇-C₁₈ aralkyl or alkaryl radicals, provided that only one of R^{IV} and R^{V} can be hydrogen; R^{X} and R^{XI} have the same meaning as R^{IV} and R^{V} except for hydrogen, provided that when the radicals from R^{V} to R^{IX} are hydrogen and R^{X} and R^{XI} are methyl, R^{IV} is not methyl; moreover, two or more of the R^{VI} to R^{XI} radicals can be bonded to form a cyclic structure.

Preferably in the above formula R^{X} and R^{XI} are methyl and R^{IV} and R^{V} are the same or different and are selected from the group consisting of isopropyl; isobutyl; tert-butyl; cyclohexyl; isopentyl; cyclohexylethyl; pentyl; cyclopentyl; heptyl; 1,5-dimethylhexyl; 3,7-dimethyloctyl; phenyl; cyclohexylmethyl; and propyl.

Specific examples of the above mentioned diethers are: 2,2-diisobutyl-1,3-dimethoxypropane; 2-isopropyl-2-isopentyl-1,3-dimethoxypropane;2,2-diisopropyl-1,3-dimethoxypropane; 2-isopropyl-2-cyclohexylmethyl-1,3-dimethoxypropane; 2,2-diphenyl-1,3-dimethoxypropane.

Additional examples of diethers having the above mentioned formula are listed in published European patent application n. 362 705.

Particularly preferred for use as external electron-donors with the catalyst component a) are the cyclopolyenic 1,3-diethers.

The molar ratio of the Al-alkyl compound to the external electron-donor generally is from 5:1 to 100:1, and preferably from 10:1 to 30:1; said ratio can be broader, for example from 0.5:1 to 100:1, during the prepolymerization phase.

The catalysts find particular application in the polymerization of CH₂=CHR olefins where R is a 1-6 carbon alkyl or aryl radical. In particular, said catalysts are adequate for the polymerization of propylene or its copolymerization with ethylene or other α-olefins.

Carrying out the polymerization in liquid monomer operating with Al/Ti ratios lower than 50, it is possible to obtain, thanks to the high productivity of the catalysts of the present invention, hyperpure homopolymers and copolymers of propylene useful in the electronic field (capacitor grade).

The catalysts of the present invention are also adequate for the production of polyethylenes and copolymers of ethylene with α-olefins, such as 1-butene, 1-hexene, and 1-octene.

The following examples are given in order to illustrate and not limit the invention.

Unless otherwise indicated, the percentages in the examples are expressed by weight.

The melt flow rate (MFR) for polypropylene is determined according to ASTM D1238, condition L.

The intrinsic viscosity [η] is determined in tetrahydronaphthalene at 135°C.

In order. to determine the fraction insoluble in xylene at 25°C (X.I. %), 2.5 g of polymer are dissolved under agitation in 250 ml of xylene at 135°C, and after 20 minutes it is allowed to cool to 25°C. After 30 minutes the precipitated polymer is filtered and dried at reduced pressure at 80°C until constant weight is reached.

### Synthesis of 9,9-bis(hydroxymethyl)fluorene

In a 500 ml flask, in anhydrous atmosphere, are introduced in order: 100 ml of dimethyl sulfoxide (DMSO) distilled on CaH₂, 8 g of paraformaldehyde (rendered anhydrous at ambient temperature and at a pressure of 2 torr for 8 hours), and 1.4 g of sodium ethylate dissolved in 6 ml of ethanol.

After having cooled the suspension with an ice bath (the melt temperature of the DMSO/EtOH mixture is 13°C), while maintaining the suspension under agitation, 100 ml of a solution of 16 g of fluorene in DMSO are added, in a period of thirty seconds.

After 3 minutes from the beginning of the addition of the solution of fluorene in DMSO, the reaction is stopped with 1.5 ml of HCl at 37%, and then it is diluted with 400 ml of water.

The mixture is saturated with NaCl, and the 9,9-bis(hydroxymethyl)fluorene is extracted with ethyl acetate. The organic phase is then rendered anhydrous with anhydrous Na₂SO₄ and the solvent is distilled off. After crystallization by way of toluene, 15.2 g of product (yield: 70%) is obtained.

The ¹H-NMR spectrum in CDCl₃, at 200 MHz and using tetramethylsilane (TMS) as internal standard, shows the following:

| | | |
|---|---|---|
| 7.77 ppm, | doublet, | 2H aromatics |
| 7.62 ppm, | doublet, | 2H aromatics |
| 7.41 ppm, | triplet, | 2H aromatics |
| 7.32 ppm | triplet, | 2H aromatics |
| 3.99 ppm | doublet, | 4H CH₂ |
| 0.25 ppm, | triplet, | 2H OH. |

### Synthesis of 9,9-bis(methoxymethyl)fluorene

In a 100 ml flask are introduced, in nitrogen atmosphere, in order: 30 ml of tetrahydrofuran (THF), 11.3 g of 9,9-bis(hydroxymethyl)fluorene, and 31.1 ml of CH₃I.

While maintaining under agitation and operating at ambient temperature, 4 g of NaH at 60% by weight in mineral oil is added, in a period of 2 hours and 30 minutes, and the content is then allowed to react for 1 hour and 30 minutes.

By way of distillation the nonreacted CH₃I is recovered, and the remaining content is diluted with 100 ml of water; the resulting floating solid is filtered and dried under vacuum at 40°C. By way of ethanol crystallization, 11.3 g of product (yield: 90%) is obtained.

The ¹H-NMR spectrum in CDCl₃, at 200 MHz and using TMS as internal standard, shows the following:

| | | |
|---|---|---|
| 7.75 ppm, | doublet, | 2H aromatics |
| 7.65 ppm, | doublet, | 2H aromatics |
| 7.39 ppm, | triplet, | 2H aromatics |
| 7.29 ppm | triplet, | 2H aromatics |
| 3.64 ppm | singlet, | 4H CH₂ |
| 3.35 ppm, | singlet, | 6H CH₃. |

### Example 1

In a 500 ml cylindric glass reactor equipped with a filtering barrier are introduced at 0°C 225 ml of TiCl₄, and, while under agitation in a period of 15 minutes, 10.1 g (54 mmoles) of microspheroidal MgCl₂.2.1 C₂H₅OH obtained as described below.

At the end of the addition, the temperature is brought to 70°C, and 9 mmoles of 9,9-bis(methoxymethyl)fluorene are introduced. The temperature is increased to 100°C and, after 2 hours, the TiCl₄ is removed by filtration. 200 ml of TiCl₄ and 9 mmoles of 9,9-bis(methoxymethyl)fluorene are added; after 1 hour at 120°C the content is filtered again and another 200 ml of TiCl₄ are added, continuing the treatment at 120°C for one more hour; finally, the content is filtered and washed at 60°C with n-heptane until all chlorine ions disappear from the filtrate. The catalyst component obtained in this manner contains: Ti = 3.5% by weight; 9,9-bis(methoxymethyl)fluorene = 16.2% by weight.

The microspheroidal MgCl₂.2.1 C₂H₅OH is prepared as follows.

48 g of anhydrous MgCl₂, 77 g of anhydrous C₂H₅OH, and 830 ml of kerosene are fed, in inert gas and at ambient temperature, in a 2 liter autoclave equipped with a turbine agitator and drawing pipe. The content is heated to 120°C while stirring thus forming the adduct between MgCl₂ and the alcohol that melts and remains mixed with the dispersing agent. The nitrogen pressure inside the autoclave is maintained at 15 atm. The drawing pipe of the autoclave is heated externally to 120°C with a heating jacket, has an inside diameter of 1 mm, and is 3 meters long from one end of the heating jacket to the other.

Then the mixture is caused to flow through the pipe at a velocity of 7m/sec ca.

At the exit of the pipe the dispersion is gathered in a 5 l flask, under agitation, containing 2.5 l of kerosene, and being externally cooled by way of a jacket maintained at an initial temperature of -40°C.

The final temperature of the dispersion is 0°C.

The spherical solid product that constituted the dispersed phase of the emulsion is separated by way of settling and filtration, and then washed with heptane and dried.

All these operations are carried out in an inert gas atmosphere.

130 g of MgCl₂.3 C₂H₅OH in the form of spherical solid particles with a maximum diameter less than or equal to 50 micron, are obtained.

The alcohol is removed from the product thus obtained at temperatures that gradually increase from 50°C to 100°C in nitrogen current until the alcohol content is reduced to 2.1 moles per mole of MgCl₂.

In a 4 liter autoclave, previously purged with gaseous propylene at 70°C for 1 hour, are introduced at ambient temperature and in propylene current 70 ml of anhydrous n-hexane containing 7 mmoles of aluminum triethyl and 4 mg of the solid catalyst component prepared as described above. The autoclave is closed, 1.7 Nl of hydrogen and 1.2 kg of liquid propylene are introduced; the agitator is put in motion and the temperature is increased to 70°C in a period of 5 minutes. After 2 hours at 70°C, the agitation is interrupted, the nonpolymerized monomer is removed, and the content is cooled to ambient temperature.

380 g of polypropylene is discharged from the autoclave, said polypropylene having a fraction insoluble in xylene at 25°C (X.I.) = 97.7%, and a melt index MFR/L = 4.5 g/10 min. The polymer yield is 95,000 g of polypropylene/g of solid catalyst component.

### Example 2

The procedure of Example 1 is used, except that the hexane suspension introduced in the polymerization autoclave is made up as follows: 70 ml of anhydrous n-hexane, 7 mmoles of aluminum triethyl, 5.3 mg of a solid catalyst component prepared as described in Example 1, and 0.35 mmoles of dicyclopentyl- dimethoxysilane. 403 g of polypropylene having X.I. = 99% and melt index MFR/L = 4.2 g/10 min. is obtained. The polymer yield is 76,000 g of polypropylene/g of solid catalyst component.

### Comparative example 1

The procedure of Example 1 is used, but in this case in order to prepare the solid catalyst component, two aliquots equal to 9 mmoles each of 2-isopropyl-2-isopentyl-1,3-dimethoxypropane are used instead of 9,9-bis(methoxymethyl)fluorene. The solid catalyst component thus obtained contains: Ti = 3.6% by weight; 2-isopropyl-2-isopentyl-1,3-dimethoxypropane = 12.7% by weight.

The polymerization is then conducted as described in Example 1, using 5.7 mg of the above mentioned solid catalyst component. 400 g of polypropylene having X.I. = 98.0% and melt index MFR/L = 5.1 g/10 min. is obtained. The polymer yield is 70,000 g of polypropylene/g of solid catalyst component.

### Comparative example 2

The procedure of Example 2 is used, but in this case the hexane suspension introduced in the polymerization autoclave is made up as follows: 70 ml of anhydrous n-hexane, 7 mmoles of aluminum triethyl, 7.0 mg of solid catalyst component prepared as described in Comparative Example 1, and 0.35 mmoles of dicyclopentyldimethoxysilane. 350 g of polypropylene having X.I. = 98.9% and melt index MFR/L = 5.5 g/10 min. is obtained.

The polymer yield is 50,000 g of polypropylene/g of solid catalyst component.

### Example 3

In the autoclave described in Example 1, previously purged with gaseous propylene at 70°C for 1 hour, are introduced at ambient temperature in order: 4.1 g of ethylene, 1.2 l of liquid propylene , and 0.34 l of hydrogen. The agitator is put in motion, the temperature is increased to 70°C in a period of 5 minutes, and by way of a steel syringe pressurized with nitrogen, a suspension composed of 10 ml of anhydrous n-hexane, 4 mmoles of aluminum triethyl, and 4 mg of a solid catalyst component prepared as described in Example 1 is introduced.

The stirring is maintained for 1.5 hours at 70°C and 32.7 bar, while feeding a propylene/ethylene mixture containing 5.9% moles of ethylene. At the end, the stirring is interrupted, the nonpolymerized monomers are removed, and the content is cooled to ambient temperature. 600 g of copolymer having an ethylene content of 4% by weight, X.I. = 91.6%, and an intrinsic viscosity [η] = 1.59 dl/g is obtained. The copolymer yield is 150,000 g of propylene-ethylene copolymer/g of solid catalyst component.

### Comparative example 3

Example 3 is repeated, but using in this case 4.1 mg of the solid catalyst component prepared according to comparative Example 1 (containing 2-isopropyl-2-isopentyl-1,3-dimethoxypropane instead of 9,9-bis(methoxymethyl)fluorene). One obtains 420 g of copolymer having an ethylene content of 3.9% by weight, X.I. = 90.7%, and intrinsic viscosity [η] = 1.55 dl/g is obtained. The copolymer yield is 102,000 g of propylene-ethylene copolymer/ g of solid catalyst component.

### Example 4

Example 2 is repeated using 5.2 mg of the solid catalyst component of Example 1, but in this case the hexane suspension of the catalyst contains 0.35 mmoles of 2-isopropyl-2-isopentyl-1,3-dimethoxypropane instead of 0.35 mmoles of dicyclopentyldimethoxysilane. 314 g of polypropylene having X.I. = 99.0% is obtained. The polymer yield is 60,000 g of polypropylene/g of catalyst component.

### Comparative Example 4

Example 1 is repeated, but in this case to prepare the solid catalyst component, two aliquots equal to 9 mmoles each of 2,2-diisobutyl-1,3-dimethoxypropane are used instead of 9,9-bis(methoxymethyl)fluorene. The product obtained comprises: Ti = 2.8% by weight; 2,2-diisobutyl-1,3-dimethoxypropane = 14.7% by weight. Using 6.1 mg of solid catalyst component, 260 g of polypropylene having X.I. = 96.9% and melt index MFR/L = 4.9 g/10 min. is obtained. The polymer yield is 42,600 g of polypropylene/g of catalyst component.

### Comparative example 5

Example 1 is repeated, but in this case the solid catalyst component is prepared by using two aliquots equal to 9 mmoles each of 2,2-diisopentyl-1,3-dimethoxypropane instead of 9,9-bis(methoxymethyl)fluorene. The product contains: Ti = 2.6% by weight; 2,2-diisopentyl-1,3-dimethoxypropane = 17.6% by weight. By using 7.3 mg of solid catalyst component, 332 g of polypropylene having X.I. = 95.2% and a melt index MFR/L = 5.2 g 10 min. is obtained.
The polymer yield is 45,400 g of polypropylene/g of catalyst component.

### Comparative example 6

Example 1 is repeated, but in this case the solid catalyst component is prepared by using two aliquots equal to 9 mmoles each of 2-isopropyl-2-cyclohexyl-1,3-dimethoxypropane instead of 9,9-bis(methoxymethyl)fluorene. The product obtained contains: Ti = 3.2% by weight; 2-isopropyl-2-cyclohexyl-1,3-dimethoxypropane = 13.2% by weight. By using 6.5 mg of solid catalyst component, 261 g of polypropylene having X.I. = 97.2% and melt index MFR/L = 5.9 g 10/min. is obtained.

The yield is 40,200 g of polypropylene/g catalyst component.

### Example 5

In a 500 ml cylindrical glass reactor equipped with a filtering barrier are introduced at 0°C 225 ml of TiCl₄ and, while under agitation in a period of 15 minutes, 10.1 g (54 mmoles) of microspheroidal MgCl₂.2.1 C₂H₅OH obtained as described in Example 1.

At the end of the addition, the temperature is brought to 40°C and 9 mmoles of diisobutyl phthalate are introduced.

The temperature is increased to 100°C in the course of 1 hour, and the stirring continues for an additional 2 hours. The TiCl₄ is then removed by filtration, 200 ml of TiCl₄ are added while continuing the stirring at 120°C for one more hour. Finally, the content is filtered and washed at 60°C with n-heptane until all chlorine ions disappear from the filtrate. The catalyst component obtained in this manner contains: Ti = 3.3% by weight; diisobutyl phthalate = 8.2% by weight.

In a 4 liter autoclave, previously purged with gaseous propylene at 70°C for 1 hour, are introduced at ambient temperature and in propylene current 70 ml of anhydrous n-hexane containing 7 mmoles of aluminum triethyl and 0.35 mmoles of 9,9-bis(methoxymethyl)fluorene, and 10 mg of the solid catalyst component prepared as described above. The autoclave is closed, 1.7 Nl of hydrogen and 1.2 kg of liquid propylene are introduced; the agitator is put in motion and the temperature is increased to 70°C in a period of 5 minutes. After 2 hours at 70°C, the agitation is interrupted, the nonpolymerized monomer is removed, and the content is cooled to ambient temperature.

450 g of polypropylene is discharged from the autoclave, said polypropylene having a fraction insoluble in xylene at 25°C (X.I.) = 97.5% and a melt index MFR/L = 5.0 g/10 min. The polymer yield is 45,000 g of polypropylene/g of solid catalyst component.

### Comparative Example 7

Example 5 is repeated using 8.9 mg of the solid catalyst component of Example 5, but in this case 0.35 mmoles of 2-isopropyl,2-isopentyl-1,3-dimethoxypropane are used as the external electron-donor compound with the aluminum triethyl (instead of the 9,9-bis(methoxymethyl)fluorene). 339 g of polypropylene are obtained, said polypropylene having X.I. = 97.7% and melt index MFR/L = 5.2 g/10 min. The polymer yield is 38,000 g of polypropylene/g of solid catalyst component.

### Example 6

In a 500 ml cylindrical glass reactor equipped with a filtering barrier are introduced at 0°C 225 ml of TiCl₄ and, while under agitation in a period of 15 minutes, 10.1 g (54 mmoles) of microspheroidal MgCl₂.2.1 C₂H₅OH obtained as described in Example 1.

At the end of the addition, the temperature is brought to 70°C and 9 mmoles of 2-isopropyl-2-isopentyl-1,3-dimethoxypropane are introduced.

The temperature is increased to 100°C and after 2 hours the TiCl₄ is removed by filtration. An additional 200 ml of TiCl₄ and 9 mmoles of 2-isopropyl-2-isopentyl-1,3-dimethoxypropane are added; after one hour at 120°C the content is filtered again and another 200 ml of TiCl₄ are added proceeding with the treatment at 120°C for another hour; finally the content is filtered and washed at 60°C with n-heptane until all chlorine ions disappear from the filtrate. The solid catalyst component obtained in this manner contains: Ti = 3.6% by weight; 2-isobutyl-2-isopentyl-1,3-dimethoxypropane = 12.7% by weight.

Carrying out the polymerization as described in Example 5, and using 9.7 mg of the catalyst component described above, 484 g of polymer having X.I. = 99% and melt index MFR/L = 5.1 g/10 min. is obtained.

The polymer yield is 50,000 g of polypropylene/g of solid catalyst component.

### Example 7

Example 6 is repeated, but using in this case 5.3 mg of the solid catalyst component of Example 1.

371 g of polypropylene having X.I. = 99.1% and MFR/L = 5.1 g/10 min. is obtained.

The polymer yield is 70,000 g of polypropylene/g of catalyst component.

### Comparative Example 8

Comparative Example 7 is repeated, but in this case 0.35 mmoles of 2,2-diisobutyl-1,3-dimethoxypropane is used as the external electron-donor compound with the aluminum triethyl.

Using 9.5 mg of solid catalyst component, 290 g of polypropylene having X.I. = 97.0% and melt index MFR/L = 5.6 g/10 min. is obtained. The yield is 30,500 g of polypropylene/g of catalyst component.

### Comparative Example 9

Comparative Example 7 is repeated, but in this case 0.35 mmoles of 2-isopropyl-2-isobutyl-1,3-dimethoxypropane is used as the external electron-donor compound with the aluminum triethyl.
Using 10 mg of solid catalyst component, 353 g of polypropylene having X.I. = 97.2% and melt index MFR/L = 4.6 g/10 min. is obtained. The yield is 35,300 g of polypropylene/g of catalyst component.

### Comparative Example 10

Comparative Example 7 is repeated, but in this case 0.35 mmoles of 2,2-diisopropyl-1,3-dimethoxypropane is used as the external electron-donor compound with the aluminum triethyl. Using 10.2 mg of solid catalyst component, 403 g of polypropylene having X.I. = 98% and melt index MFR/L = 5.1 g/10 min. is obtained. The yield is 39,500 g of polypropylene/g of catalyst component.

### Comparative Example 11

Comparative Example 7 is repeated, but in this case 0.35 mmoles of 2-ethyl-2-butyl-1,3-dimethoxypropane is used as the external electron-donor compound with the aluminum triethyl. Using 9.8 mg of solid catalyst component, 307 g of polypropylene having X.I. = 95.2% and melt index MFR/L = 5.1 g/10 min. is obtained. The yield is 31,300 g of polypropylene/g of catalyst component.

### Comparative Example 12

Comparative Example 7 is repeated, but in this case 0.35 mmoles of 2,2-diphenyl-1,3-dimethoxypropane is used as the external electron-donor compound with the aluminum triethyl. Using 8.7 mg of solid catalyst component, 347 g of polypropylene having X.I. = 98.0% and melt index MFR/L = 3.1 g/10 min. is obtained. The yield is 40,000 g of polypropylene/g of catalyst component.

### Comparative Example 13

Comparative Example 7 is repeated, but in this case 0.35 mmoles of 2-isopropyl-2-cyclohexyl-1,3-dimethoxypropane is used as the external electron-donor compound with the aluminum triethyl.
Using 9.1 mg of solid catalyst component, 297 g of polypropylene having X.I. = 98.0% and melt index MFR/L = 3.8 g/10 min. is obtained. The yield is 32,600 g of polypropylene/g of catalyst component.

### Comparative Example 14

Comparative Example 7 is repeated, but in this case 0.35 mmoles of 2,2-dicyclopentyl-1,3-dimethoxypropane is used as the external electron-donor compound with the aluminum triethyl. Using 9.6 mg of solid catalyst component, 385 g of polypropylene having X.I. = 97.9% and melt index MFR/L = 3.2 g/10 min. is used. The yield is 40,100 g of polypropylene/g of catalyst component.

## Claims

1. A solid catalyst component for the polymerization of olefins, comprising a magnesium halide in active form, and, supported thereon, a titanium compound containing at least one Ti-halogen bond and a cyclopolyenic 1,3-diether as an internal electron-donor compound in which only the carbon atom in position 2 belongs to a cyclic or polycyclic structure made up of 5, 6, or 7 carbon atoms, or 5-n or 6-n' carbon atoms, and respectively n atoms of nitrogen and n' heteroatoms selected from the group consisting of N, O, S and Si, where n is 1 or 2 and n' is 1, 2 or 3, said structure containing two or three unsaturations and providing, a cyclopolyenic structure and optionally being condensed with other cyclic structures, or substituted with one or more substituents selected from the group consisting of linear or branched alkyl radicals; cycloalkyl, aryl, aralkyl, alkaryl radicals and halogens, or being condensed with other cyclic structures and substituted with one or more of the above mentioned substituents which can also be bonded to the condensed cyclic structures; one or more of the above mentioned alkyl, cycloalkyl, aryl, aralkyl or alkaryl radicals and the condensed cyclic structures optionally containing one or more heteroatoms as substitutes for carbon or hydrogen atoms, or both.

2. The solid catalyst component of claim 1, where the carbon atoms in positions 1 and 3 in the cyclopolyenic 1,3-diether are secondary.

3. The solid catalyst component of claim 1, where the substituents in the cyclopolyenic 1,3-diether are selected from the group consisting of linear or branched C₁-C₂₀ alkyl; C₃-C₂₀ cycloalkyl; C₆-C₂₀ aryl; C₇-C₂₀ aralkyl and C₇-C₂₀ alkaryl radicals; Cl and F.

4. The solid catalyst component of claim 1, where the cyclopolyenic 1,3-diether is selected from the compounds of the general formula: 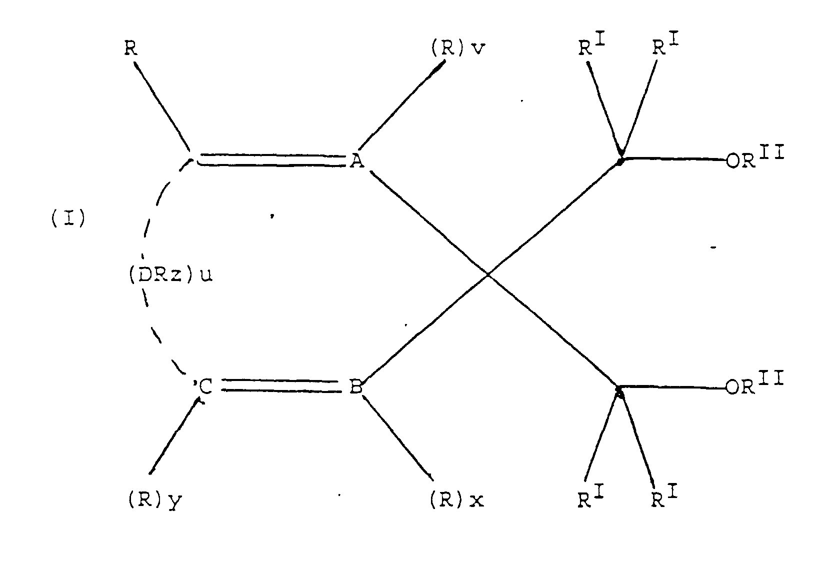 where A, B, C and D are carbon atoms or heteroatoms selected from the group consisting of N, O, S and Si; v, x and y are 0 or 1; u and z are 0 or 1 or 2;
provided that when u = 0:
i) A, B and C are carbon atoms and v, x and y are equal to 1; or
ii) A is a nitrogen atom, B and C are carbon atoms, v is equal to 0 and x and y are equal to 1; or
iii) A and B are nitrogen atoms, C is a carbon atom, v and x are equal to 0 and y is equal to 1; or
iv) A and B are carbon atoms, C is a nitrogen atom, v and x are equal to 1 and y is equal to 0;
when u = 1:
1) A, B, C and D are carbon atoms, v, x and y are equal to 1 and z is equal to 2; or
2) A and B are carbon atoms, C is a nitrogen atom, D is an oxygen atom, v and x are equal to 1, y and z are equal to 0; or
3) A, B and C are carbon atoms, D is an oxygen, nitrogen, sulfur, or silicon atom, v, x and y are equal to 1 and z is equal to 0 when D is an oxygen or sulfur atom, equal to 1 when D is a nitrogen atom, and equal to 2 when D is a silicon atom;
when u = 2:
A, B and C are carbon atoms, D represents two carbon atoms bonded to each other by a single or double bond, v, x and y are equal to 1 and z is equal to 1 when the couple of carbon atoms D is bonded by a double bond, and equal to 2 when said couple is bonded by a single bond; radicals R and R^{I}, equal or different, are selected from the group consisting of hydrogen; halogens; C₁-C₂₀ alkyl radicals, linear or branched; C₃-C₂₀ cycloalkyl, C₆-C₂₀ aryl, C₇-C₂₀ alkaryl and C₇-C₂₀ aralkyl radicals; the R^{II} radicals, equal or different, are selected from the group consisting of C₁-C₂₀ alkyl radicals, linear or branched; C₃-C₂₀ cycloalkyl, C₆-C₂₀ aryl, C₇-C₂₀ alkaryl and C₇-C₂₀ aralkyl radicals, and two or more of the R radicals can be bonded to each other to form condensed cyclic structures, saturated or unsaturated, optionally substituted with R^{III} radicals selected from the group consisting of halogens; C₁-C₂₀ alkyl radicals, linear or branched; C₃-C₂₀ cycloalkyl, C₆-C₂₀ aryl, C₇-C₂₀ alkaryl and C₇-C₂₀ aralkyl radicals; said radicals from R to R^{III} optionally containing one or more heteroatoms as substitutes for carbon or hydrogen atoms, or both.

5. The solid catalyst component of claim 4, where the cyclopolyenic 1,3-diether is selected from the compounds of the general formula: 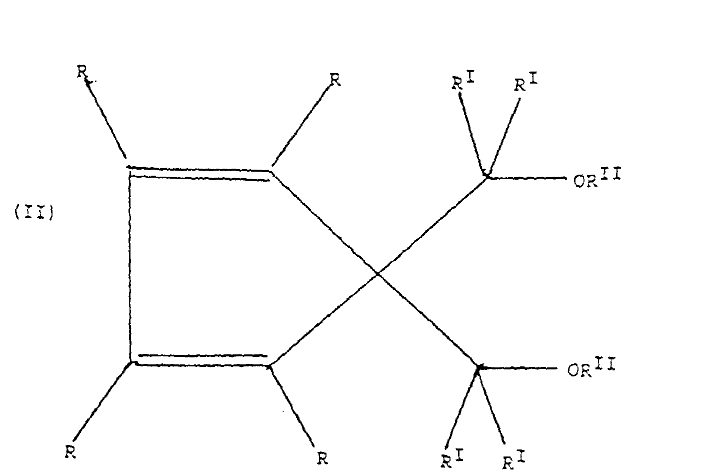 where the radicals R and R^{I}, equal or different, are selected from the group consisting of hydrogen; halogens; C₁-C₂₀ alkyl radicals, linear or branched; C₃-C₂₀ cycloalkyl, C₆-C₂₀ aryl, C₇-C₂₀ alkaryl and C₇-C₂₀ aralkyl radicals; the R^{II} radicals, equal or different, are selected from the group consisting of C₁-C₂₀ alkyl radicals, linear or branched; C₃-C₂₀ cycloalkyl, C₆-C₂₀ aryl, C₇-C₂₀ alkaryl and C₇-C₂₀ aralkyl radicals, and two or more of the R radicals can be bonded to each other to form condensed cyclic structures, saturated or unsaturated, optionally substituted with R^{III} radicals selected from the group consisting of halogens; C₁-C₂₀ alkyl radicals, linear or branched; C₃-C₂₀ cycloalkyl, C₆-C₂₀ aryl, C₇-C₂₀ alkaryl and C₇-C₂₀ aralkyl radicals; said radicals from R to R^{III} optionally containing one or more heteroatoms as substitutes for carbon or hydrogen atoms, or both.

6. The solid catalyst component of claim 5, where the cyclopolyenic 1,3-diether is selected from the group consisting of:
1,1-bis(methoxymethyl)-cyclopentadiene;
1,1-bis(methoxymethyl)-2,3,4,5-tetramethylcyclopentadiene;
1,1-bis(methoxymethyl)-2,3,4,5-tetraphenylcyclopentadiene;
1,1-bis(methoxymethyl)indene;
1,1-bis(methoxymethyl)-2,3-dimethylindene;
1,1-bis(methoxymethyl)-4,7-dimethylindene;
1,1-bis(methoxymethyl)-4-phenyl-2-methylindene;
1,1-bis(methoxymethyl)-7-(3,3,3-trifluoropropyl)indene;
1,1-bis(methoxymethyl)-7-trimethylsilylindene;
1,1-bis(methoxymethyl)-7-trifluoromethylindene;
1,1-bis(methoxymethyl)-7-methylindene;
1,1-bis(methoxymethyl)-7-cyclopenthylindene;
1,1-bis(methoxymethyl)-7-isopropylindene;
1,1-bis(methoxymethyl)-7-cyclohexylindene;
1,1-bis(methoxymethyl)-7-tert-butylindene;
1,1-bis(methoxymethyl)-7-tert-butyl-2-methylindene;
1,1-bis(methoxymethyl)-7-phenylindene;
1,1-bis(methoxymethyl)-2-phenylindene;
9,9-bis(methoxymethyl)fluorene;
9,9-bis(methoxymethyl)-2,3,6,7-tetramethylfluorene;
9,9-bis(methoxymethyl)-2,3,4,5,6,7-hexafluorofluorene;
9,9-bis(methoxymethyl)-2,3-benzofluorene;
9,9-bis(methoxymethyl)-2,3,6,7-dibenzofluorene;
9,9-bis(methoxymethyl)-2,7-diisopropylfluorene;
9,9-bis(methoxymethyl)-1,8-dichlorofluorene;
9,9-bis(methoxymethyl)-2,7-dicyclopentylfluorene;
9,9-bis(methoxymethyl)-1,8-difluorofluorene;
9,9-bis(methoxymethyl)-1,2,3,4-tetrahydrofluorene;
9,9-bis(methoxymethyl)-1,2,3,4,5,6,7,8-octahydrofluorene;
9,9-bis(methoxymethyl)-4-tert-butylfluorene.

7. The solid catalyst component of claim 4, where the cyclopolyenic 1,3-diether is selected from the group consisting of 9,9-bis(methoxymethyl)xanthene and 9,9-bis(methoxymethyl)-2,3,6,7-tetramethylxanthene.

8. The solid catalyst component of claim 1, where the titanium compound is selected from the group consisting of halides and halogen alcoholates.

9. The solid catalyst component of claim 8, where the titanium compound is titanium tetrachloride.

10. The solid catalyst component of claim 1, where the cyclopolyenic 1,3-diether is present in quantities ranging from 5 to 20% molar with respect to the magnesium halide.

11. The solid catalyst component of claim 1, where the Mg/Ti ratio is from 30:1 to 4:1.

12. A catalyst for the polymerization of olefins comprising the product of the reaction of:
a) the solid catalyst component of claim 1, with
b) an Al-alkyl compound, and optionally
c) an electron-donor compound other than the cyclpolyenic 1,3-diethers.

13. The catalyst of claim 12 where the Al-alkyl compound b) is an Al-trialkyl.

14. The catalyst of claim 12, wherein the electron-donor compound c) is selected from the group consisting of silicon compounds containing at least one Si-OR bond, where R is a hydrocarbon radical, 2,2,6,6-tetramethylpiperidine, 2,6-diisopropylpiperidine, and carboxylic acid esters.

15. The catalyst of claim 12 wherein the electron-donor compound c) is selected from the compounds having the general formula 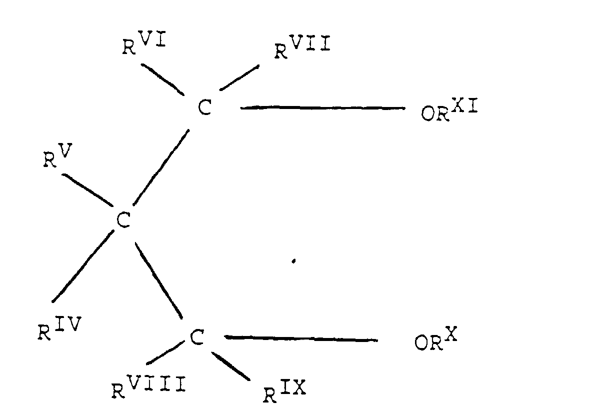 where R^{IV}, R^{V}, R^{VI}, R^{VII}, R^{VIII} and R^{IX} are the same or different, and are hydrogen; linear or branched C₁-C₁₈ alkyl, C₃-C₁₈ cycloalkyl, C₆-C₁₈ aryl, C₇-C₁₈ aralkyl or alkaryl radicals, provided that only one of R^{IV} and R^{V} can be hydrogen; R^{X} and R^{XI} have the same meaning as R^{IV} and R^{V} except for hydrogen, provided that when the radicals from R^{V} to R^{IX} are hydrogen and R^{X} and R^{XI} are methyl, R^{IV} is not methyl; moreover, two or more of the R^{VI} to R^{XI} radicals can be bonded to form a cyclic structure.

16. A catalyst for the polymerization of olefins comprising the product of the reaction between:
a¹) a solid catalyst component comprising a magnesium halide in active form and, supported thereon, a titanium compound containing at least one Ti-halogen bond and an electron-donor compound;
b) an Al-alkyl compound;
c) a cyclopolyenic 1,3-diether as an external electron-donor compound in which only the carbon atom in position 2 belongs to a cyclic or polycyclic structure made up of 5, 6 or 7 carbon atoms, or of 5-n or 6-n' carbon atoms and respectively n nitrogen atoms and n' heteroatoms selected from the group consisting of N, O, S and Si, where n is 1 or 2, and n' is 1, 1, 2 or 3, said structure containing two or three unsaturations and providing a cyclopolyenic structure, and optionally being condensed with other cyclic structures, or substituted with one or more substituents selected from the group consisting of linear or branched alkyl radicals; cycloalkyl, aryl, aralkyl, alkaryl radicals and halogens, or being condensed with other cyclic structures and substituted with one or more of the above mentioned substituents that can also be bonded to the condensed cyclic structures; one or more of the above mentioned alkyl, cycloalkyl, aryl, aralkyl or alkaryl radicals and the condensed cyclic structures optionally containing one or more heteroatoms as substitutes of carbon or hydrogen atoms, or both.

17. The catalyst of claim 16, where the substituents in the cyclopolyenic 1,3-diether c) are selected from the group consisting of linear or branched C₁-C₂₀ alkyl radicals; C₃-C₂₀ cycloalkyl; C₆-C₂₀ aryl, C₇-C₂₀ aralkyl and C₇-C₂₀ alkaryl radicals; Cl and F.

18. The catalyst of claim 16, where the cyclopolyenic 1,3-diether c) is selected from the compounds of the general formula: 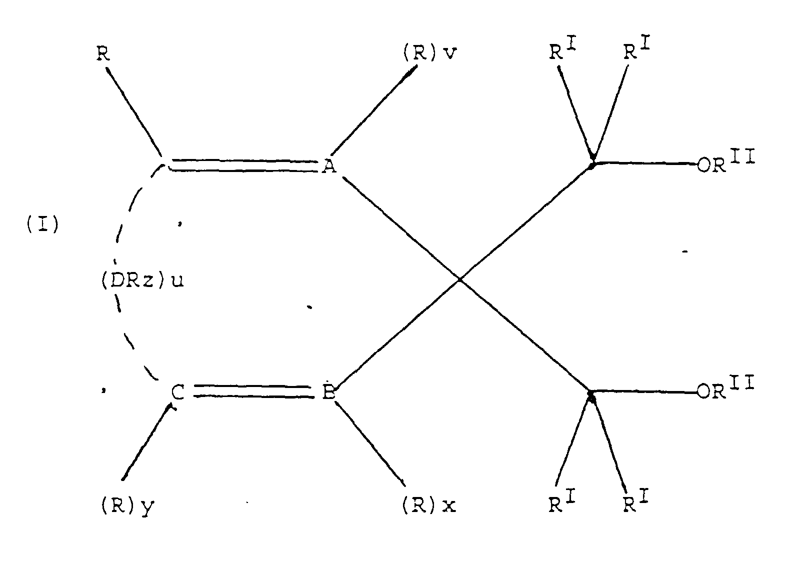 where A, B, C and D are carbon atoms or heteroatoms selected from the group consisting of N, O, S and Si; v, x, and y are 0 or 1; u and z are either 0 or 1 or 2;
provided that when u = 0:
i) A, B and C are carbon atoms and v, x and y are equal to 1; or
ii) A is a nitrogen atom, B and C are carbon atoms, v is equal to 0 and x and y are equal to 1; or
iii) A and B are nitrogen atoms, C is a carbon atom, v and x are equal to 0 and y is equal to 1; or
iv) A and B are carbon atoms, C is a nitrogen atom, v and x are equal to 1 and y is equal to 0;
when u = 1:
1) A, B, C and D are carbon atoms, v, x and y are equal to 1 and z is equal to 2; or
2) A and B are carbon atoms, C is a nitrogen atom, D is an oxygen atom, v and x are equal to 1, y and z are equal to 0; or
3) A, B and C are carbon atoms, D is an oxygen, nitrogen, sulfur or silicon atom, v, x and y are equal to 1 and z is equal to 0 when D is an oxygen or sulfur atom, equal to 1 when D is a nitrogen atom and equal to 2 when D is a silicon atom;
when u = 2:
A, B and C are carbon atoms, D represents two carbon atoms bonded to each other by a single or double bond, v, x and y are equal to 1 and z is equal to 1 when the couple of carbon atoms D is bonded by a double bond and equal to 2 when said couple is bonded by a single bond; radicals R and R^{I}, equal or different, are selected from the group consisting of hydrogen; halogens; C₁-C₂₀ alkyl radicals, linear or branched; C₃-C₂₀ cycloalkyl, C₆-C₂₀ aryl, C₇-C₂₀ alkaryl and C₇-C₂₀ aralkyl radicals; the R^{II} radicals, equal or different, are selected from the group consisting of C₁-C₂₀ alkyl radicals, linear or branched; C₃-C₂₀ cycloalkyl, C₆-C₂₀ aryl, C₇-C₂₀ alkaryl and C₇-C₂₀ aralkyl radicals, and two or more of the R radicals can be bonded to each other to form condensed cyclic structures, saturated or unsaturated, optionally substituted with R^{III} radicals selected from the group consisting of halogens; C₁-C₂₀ alkyl radicals, linear or branched; C₃-C₂₀ cycloalkyl, C₆-C₂₀ aryl, C₇-C₂₀ alkaryl and C₇-C₂₀ aralkyl radicals; said radicals from R to R^{III} optionally containing one or more heteroatoms as substitutes for carbon or hydrogen atoms, or both.

19. The catalyst of claim 18, where the cyclopolyenic 1,3-diether c) is selected from compounds of the general formula: 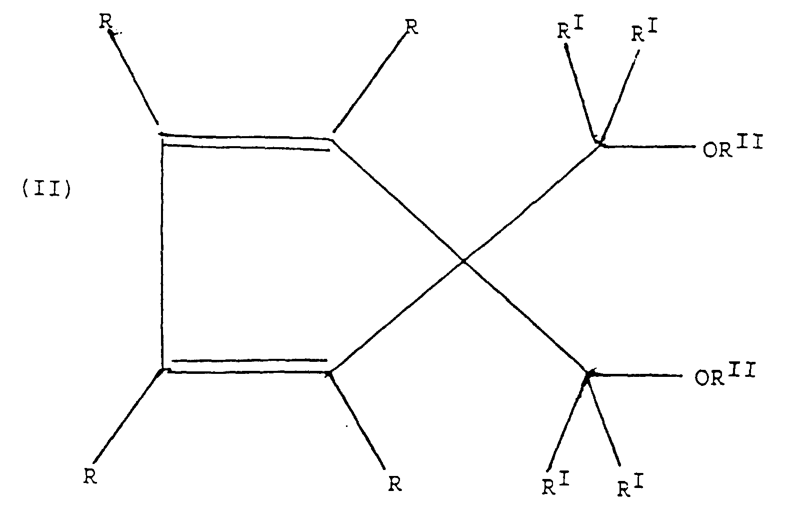 where radicals R and R^{I}, equal or different, are selected from the group consisting of hydrogen; halogens; C₁-C₂₀ alkyl radicals, linear or branched; C₃-C₂₀ cycloalkyl, C₆-C₂₀ aryl, C₇-C₂₀ alkaryl and C₇-C₂₀ aralkyl radicals; the R^{II} radicals, equal or different, are selected from the group consisting of C₁-C₂₀ alkyl radicals, linear or branched; C₃-C₂₀ cycloalkyl, C₆-C₂₀ aryl, C₇-C₂₀ alkaryl and C₇-C₂₀ aralkyl radicals, and two or more of the R radicals can be bonded to each other to form condensed cyclic structures, saturated or unsaturated, optionally substituted with R^{III} radicals selected from the group consisting of halogens; C₁-C₂₀ alkyl radicals, linear or branched; C₃-C₂₀ cycloalkyl, C₆-C₂₀ aryl, C₇-C₂₀ alkaryl and C₇-C₂₀ aralkyl radicals; said radicals from R to R^{III} optionally containing one or more heteroatoms as substitutes for carbon or hydrogen atoms, or both.

20. The catalyst of claim 19, where the cyclopolyenic 1,3-diether c) is selected from the group consisting of:
1,1-bis(methoxymethyl)-cyclopentadiene;
1,1-bis(methoxymethyl)-2,3,4,5-tetramethylcyclopentadiene;
1,1-bis(methoxymethyl)-2,3,4,5-tetraphenylcyclopentadiene;
1,1-bis(methoxymethyl)indene;
1,1-bis(methoxymethyl)-2,3-dimethylindene;
1,1-bis(methoxymethyl)-4,7-dimethylindene;
1,1-bis(methoxymethyl)-4-phenyl-2-methylindene;
1,1-bis(methoxymethyl)-7-(3,3,3-trifluoropropyl)indene;
1,1-bis(methoxymethyl)-7-trimethylsilylindene;
1,1-bis(methoxymethyl)-7-trifluoromethylindene;
1,1-bis(methoxymethyl)-7-methylindene;
1,1-bis(methoxymethyl)-7-cyclopenthylindene;
1,1-bis(methoxymethyl)-7-isopropylindene;
1,1-bis(methoxymethyl)-7-cyclohexylindene;
1,1-bis(methoxymethyl)-7-tert-butylindene;
1,1-bis(methoxymethyl)-7-tert-butyl-2-methylindene;
1,1-bis(methoxymethyl)-7-phenylindene;
1,1-bis(methoxymethyl)-2-phenylindene;
9,9-bis(methoxymethyl)fluorene;
9,9-bis(methoxymethyl)-2,3,6,7-tetramethylfluorene;
9,9-bis(methoxymethyl)-2,3,4,5,6,7-hexafluorofluorene;
9,9-bis(methoxymethyl)-2,3-benzofluorene;
9,9-bis(methoxymethyl)-2,3,6,7-dibenzofluorene;
9,9-bis(methoxymethyl)-2,7-diisopropylfluorene;
9,9-bis(methoxymethyl)-1,8-dichlorofluorene;
9,9-bis(methoxymethyl)-2,7-dicyclopentylfluorene;
9,9-bis(methoxymethyl)-1,8-difluorofluorene;
9,9-bis(methoxymethyl)-1,2,3,4-tetrahydrofluorene;
9,9-bis(methoxymethyl)-1,2,3,4,5,6,7,8-octahydrofluorene;
9,9-bis(methoxymethyl)-4-tert-butylfluorene;
1,1-bis(α-metoxybenzyl)indene;
1,1-bis(1'-methoxyethyl)-5,6-dichloroindene;
9,9-bis(α-methoxybenzyl)fluorene;
9,9-bis(1'-methoxyethyl)fluorene;
9-(methoxymethyl)-9-(1'-methoxyethyl)-2,3,6,7-tetrafluorofluorene;
9-methoxymethyl-9-pentoxymethylfluorene;
9-methoxymethyl-9-ethoxymethylfluorene;
9-methoxymethyl-9-(1'methoxyethyl)-fluorene;

21. The catalyst of claim 18, where the cyclopolyenic 1,3-diether c) is selected from the group consisting of 9,9-bis(methoxymethyl)xanthene, and 9,9-bis(methoxymethyl)-2,3,6,7-tetramethylxanthene.

22. The catalyst of claim 16, where the Al-alkyl compound is an Al-trialkyl.

23. The catalyst of claim 16, where the titanium compound supported on the solid catalyst component a¹) is selected from the group consisting of halides and halogen alcoholates.

24. The catalyst of claim 16, where the electron-donor compound supported on the solid catalyst component a¹) is a Lewis base containing one or more electronegative groups where the electron-donor atoms are selected from the group consisting of N, O, S, P, As or Sn.

25. The catalyst of claim 24, where the electron-donor compound supported on the solid catalyst component a¹) is an electron-donor compound that can be extracted with Al-triethyl from the catalyst component a¹) for at least 70% in moles, the surface area (B.E.T.) of the solid product of extraction being at least 20 m²/g.

26. The catalyst of claim 24, where the electron-donor compound supported on the solid catalyst component a¹) is a phthalic acid ester.

27. The catalyst of claim 24, where the electron-donor compound supported on the solid catalyst component a¹) is an ether containing two or more ether groups and that, under standard conditions, is complexed with anhydrous magnesium chloride for less than 60 mmoles per 100 g of chloride and with TiCl₄ does not undergo substitution reactions, or it only does so for less that 50% in moles.

28. The catalyst of claim 24, where the electron-donor compound supported on the solid catalyst component a¹) is a cyclopolyenic 1,3-diether in which only the carbon atom in position 2 belongs to a cyclic or polycyclic structure made up of 5, 6 or 7 carbon atoms, or 5-n or 6-n' carbon atoms and respectively n nitrogen atoms and n' heteroatoms selected from the group consisting of N, O, S and Si, where n is 1 or 2 and n' is 1, 2 or 3, said structure containing two or three unsaturations and providing a cyclopolyenic structure and optionally being condensed with other cyclic structures, or substituted with one or more substituents selected from the group consisting of linear or branched alkyl radicals; cycloalkyl, aryl, aralkyl, alkaryl radicals and halogens, or being condensed with other cyclic structures and substituted with one or more of the above mentioned substituents that can also be bonded to the condensed cyclic structures; one or more of the above mentioned alkyl, cycloalkyl, aryl, aralkyl, or alkaryl radicals and the condensed cyclic structures optionally containing one or more heteroatoms as substitutes of carbon or hydrogen atoms, or both.

29. A process for the polymerization of CH₂=CHR olefins, where R is hydrogen or a 1-6 carbon alkyl radical or an aryl radical, or mixtures of said olefins or of said olefins and diolefins, said process being carried out in liquid phase in the presence or not of an aliphatic or aromatic hydrocarbon solvent, or in gas phase, or by combining polymerization stages in liquid phase and in gas phase, in the presence of a catalyst as defined in claims 12 and 16.

## Patentansprüche

1. Feste Katalysatorkomponente für die Polymerisation von Olefinen, umfassend ein Magnesiumhalogenid in aktiver Form und getragen darauf, eine Titanverbindung, die mindestens eine Ti-Halogen-Bindung enthält und ein Cyclopolyen-1,3-diether als innere Elektronendonorverbindung, in dem nur das Kohlenstoffatom in Stellung 2 zu einer cyclischen oder polycyclischen Struktur, aufgebaut aus 5, 6 oder 7 Kohlenstoffatomen oder 5-n oder 6-n' Kohlenstoffatomen und n Atomen von Stickstoff bzw. n' Heteroatomen, ausgewählt aus der Gruppe, bestehend aus N, O, S und Si, wobei n 1 oder 2 ist und n' 1, 2 oder 3 ist, gehört, wobei die Struktur 2 oder 3 Ungesättigtheiten enthält und eine Cyclopolyen-Struktur bereitstellt und gegebenenfalls mit weiteren cyclischen Strukturen kondensiert ist oder mit einem oder mehreren Substituenten, ausgewählt aus der Gruppe, bestehend aus linearen oder verzweigten Alkylresten, Cycloalkyl-, Aryl-, Aralkyl-, Alkarylresten und Halogenatomen, substituiert ist oder mit weiteren cyclischen Strukturen kondensiert ist und mit einem oder mehreren der vorstehend erwähnten Substituenten, die ebenfalls an die kondensierten cyclischen Strukturen gebunden sein können, substituiert ist, wobei einer oder mehrere der vorstehend erwähnten Alkyl-, Cycloalkyl-, Aryl-, Aralkyl- oder Alkarylreste und der kondensierten cyclischen Strukturen gegebenenfalls ein oder mehrere Heteroatome als Ersatz für Kohlenstoff- oder Wasserstoffatome oder beide enthalten.

2. Feste Katalysatorkomponente nach Anspruch 1, wobei die Kohlenstoffatome in Stellungen 1 und 3 in dem Cyclopolyen-1,3-diether sekundär sind.

3. Feste Katalysatorkomponente nach Anspruch 1, wobei die Substituenten in dem Cyclopolyen-1,3-diether ausgewählt sind aus der Gruppe, bestehend aus linearen oder verzweigten C₁-C₂₀-Alkyl-, C₃-C₂₀-Cycloalkyl-, C₆-C₂₀-Aryl-, C₇-C₂₀-Aralkyl- und C₇-C₂₀-Alkarylresten; Cl und F.

4. Feste Katalysatorkomponente nach Anspruch 1, wobei der Cyclopolyen-1,3-diether ausgewählt ist aus den Verbindungen der allgemeinen Formel: 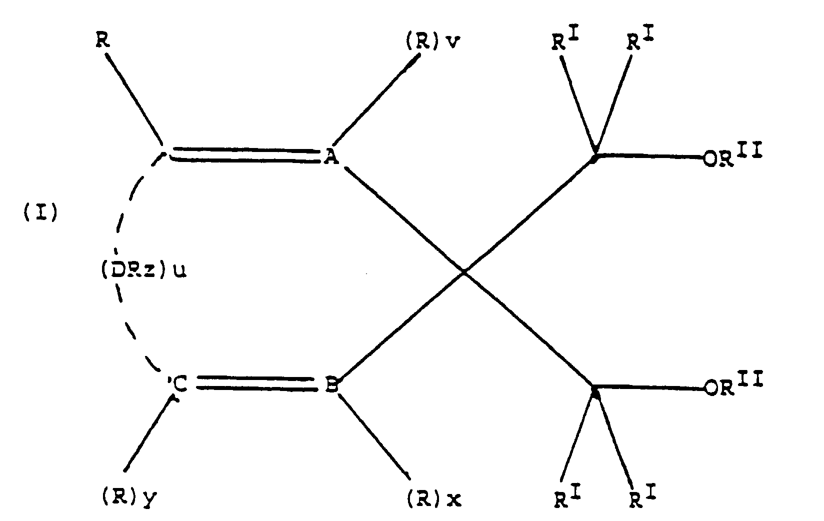 worin A, B, C und D Kohlenstoffatome oder Heteroatome, ausgewählt aus der Gruppe, bestehend aus N, O, S und Si, darstellen; v, x und y 0 oder 1 sind; u und z 0 oder 1 oder 2 sind; mit der Maßgabe, daß, wenn u = 0:
i) A, B und C Kohlenstoffatome darstellen und v, x und y 1 sind; oder
ii) A ein Stickstoffatom darstellt, B und C Kohlenstoffatome darstellen, v 0 ist und x und y 1 sind; oder
iii) A und B Stickstoffatome darstellen, C ein Kohlenstoffatom darstellt, v und x 0 sind und y 1 ist; oder
iv) A und B Kohlenstoffatome darstellen, C ein Stickstoffatom darstellt, v und x 1 sind und y 0 ist;
und wenn u = 1:
1) A, B, C und D Kohlenstoffatome darstellen, v, x und y 1 sind und z 2 ist; oder
2) A und B Kohlenstoffatome darstellen, C ein Stickstoffatom darstellt, D ein Sauerstoffatom darstellt, v und x 1 sind, y und z 0 sind; oder
3) A, B und C Kohlenstoffatome darstellen, D ein Sauerstoff-, Stickstoff-, Schwefel- oder Siliziumatom darstellt, v, x und y 1 sind und z 0 ist, wenn D ein Sauerstoff- oder Schwefelatom darstellt, 1 ist, wenn D ein Stickstoffatom darstellt, und 2 ist, wenn D ein Siliziumatom darstellt;
wenn u = 2:
A, B und C Kohlenstoffatome darstellen, D zwei Kohlenstoffatome, die jeweils durch Einfach- oder Doppelbindung aneinander gebunden sind, wiedergeben, v, x und y 1 sind und z 1 ist, wenn das Paar Kohlenstoffatome D durch eine Doppelbindung gebunden ist, und 2 sind, wenn das Paar durch eine Einfachbindung gebunden ist; die Reste R und R^{I}, gleich oder verschieden, ausgewählt sind aus der Gruppe, bestehend aus Wasserstoff, Halogenatomen, linearen oder verzweigten C₁-C₂₀-Alkylresten, C₃-C₂₀-Cycloalkyl-, C₆-C₂₀-Aryl-, C₇-C₂₀-Alkaryl- und C₇-C₂₀-Aralkylresten; die Reste R^{II}, gleich oder verschieden, ausgewählt sind aus der Gruppe, bestehend aus linearen oder verzweigten C₁-C₂₀-Alkylresten, C₃-C₂₀-Cycloalkyl-, C₆-C₂₀-Aryl-, C₇-C₂₀-Alkaryl- und C₇-C₂₀-Aralkylresten, und zwei oder mehrere der Reste R zur Bildung von gesättigten oder ungesättigten, kondensierten cyclischen Strukturen, die gegebenenfalls mit Resten R^{III}, ausgewählt aus der Gruppe, bestehend aus Halogenatomen, linearen oder verzweigten C₁-C₂₀-Alkylresten, C₃-C₂₀-Cycloalkyl-, C₆-C₂₀-Aryl-, C₇-C₂₀-Alkaryl- und C₇-C₂₀-Aralkylresten, substituiert sind, aneinander gebunden sein können; wobei die Reste R bis R^{III} gegebenenfalls ein oder mehrere Heteroatome als Ersatz für Kohlenstoff- oder Wasserstoffatome oder beide enthalten.

5. Feste Katalysatorkomponente nach Anspruch 4, wobei der Cyclopolyen-1,3-diether ausgewählt ist aus den Verbindungen der allgemeinen Formel: 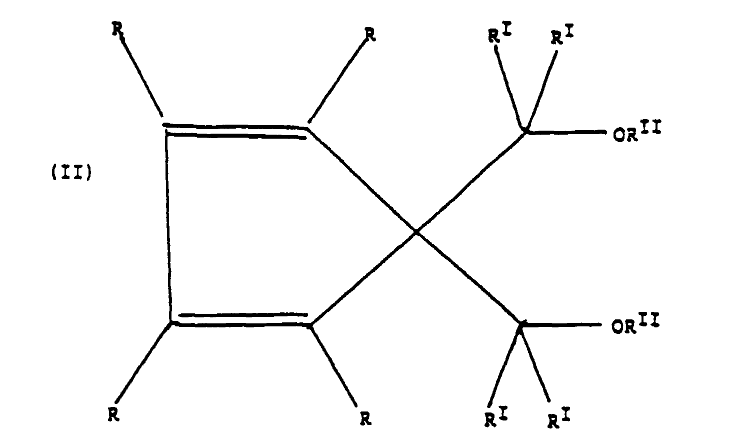 worin die Reste R und R^{I}, gleich oder verschieden, ausgewählt sind aus der Gruppe, bestehend aus Wasserstoff, Halogenatomen, linearen oder verzweigten C₁-C₂₀-Alkylresten, C₃-C₂₀-Cycloalkyl-, C₆-C₂₀-Aryl-, C₇-C₂₀-Alkaryl- und C₇-C₂₀-Aralkylresten; die Reste R^{II}, gleich oder verschieden, ausgewählt sind aus der Gruppe, bestehend aus linearen oder verzweigten C₁-C₂₀-Alkylresten, C₃-C₂₀-Cycloalkyl-, C₆-C₂₀-Aryl-, C₇-C₂₀-Alkaryl- und C₇-C₂₀-Aralkylresten, und zwei oder mehrere der Reste R zur Bildung gesättigter oder ungesättigter, kondensierter, cyclischer Strukturen, die gegebenenfalls mit Resten R^{III}, ausgewählt aus der Gruppe, bestehend aus Halogenatomen, linearen oder verzweigten C₁-C₂₀-Alkylresten, C₃-C₂₀-Cycloalkyl-, C₆-C₂₀-Aryl-, C₇-C₂₀-Alkaryl- und C₇-C₂₀-Aralkylresten, substituiert sind, aneinander gebunden sein können; wobei die Reste R bis R^{III} gegebenenfalls ein oder mehrere Heteroatome als Ersatz für Kohlenstoff- oder Wasserstoffatome oder beide enthalten.

6. Feste Katalysatorkomponente nach Anspruch 5, wobei der Cyclopolyen-1,3-diether ausgewählt ist aus der Gruppe, bestehend aus:
1,1-Bis(methoxymethyl)-cyclopentadien; 1,1-Bis(methoxymethyl)-2,3,4,5,-tetramethylcyclopentadien; 1,1-Bis(methoxymethyl)-2,3,4,5,-tetraphenylcyclopentadien; 1,1-Bis(methoxymethyl)inden; 1,1-Bis(methoxymethyl)-2,3-dimethylinden; 1,1-Bis(methoxymethyl)-4,7-dimethylinden; 1,1-Bis(methoxymethyl)-4-phenyl-2-methylinden; 1,1-Bis(methoxymethyl)-7-(3,3,3-trifluorpropyl)inden; 1,1-Bis(methoxymethyl)-7-trimethylsilylinden; 1,1-Bis(methoxymethyl)-7-trifluormethylinden; 1,1-Bis(methoxymethyl)-7-methylinden; 1,1-Bis(methoxymethyl)-7-cyclopentylinden; 1,1-Bis(methoxymethyl)-7-isopropylinden; 1,1-Bis(methoxymethyl)-7-cyclohexylinden; 1,1-Bis(methoxymethyl)-7-tert-butylinden; 1,1-Bis(methoxymethyl)-7-tert-butyl-2-methylinden; 1,1-Bis(methoxymethyl)-7-phenylinden; 1,1-Bis(methoxymethyl)-2-phenylinden; 9,9-Bis(methoxymethyl)fluoren; 9,9-Bis(methoxymethyl)-2,3,6,7-tetramethylfluoren; 9,9-Bis(methoxymethyl)-2,3,4,5,6,7-hexafluorfluoren; 9,9-Bis(methoxymethyl)-2,3-benzofluoren; 9,9-Bis(methoxymethyl)-2,3,6,7-dibenzofluoren; 9,9-Bis(methoxymethyl)-2,7-diisopropylfluoren; 9,9-Bis(methoxymethyl)-1,8-dichlorfluoren; 9,9-Bis(methoxymethyl)-2,7-dicyclopentylfluoren; 9,9-Bis(methoxymethyl)-1,8-difluorfluoren; 9,9-Bis(methoxymethyl)-1,2,3,4-tetrahydrofluoren; 9,9-Bis(methoxymethyl)-1,2,3,4,5,6,7,8-octahydrofluoren; 9,9-Bis(methoxymethyl)-4-tert-butylfluoren.

7. Feste Katalysatorkomponente nach Anspruch 4, wobei der Cyclopolyen-1,3-diether ausgewählt ist aus der Gruppe, bestehend aus 9,9-Bis(methoxymethyl)xanthen und 9,9-Bis(methoxymethyl)-2,3,6,7-tetramethylxanthen.

8. Feste Katalysatorkomponente nach Anspruch 1, wobei die Titanverbindung ausgewählt ist aus der Gruppe, bestehend aus Halogeniden und Halogenalkoholaten.

9. Feste Katalysatorkomponente nach Anspruch 8, wobei die Titanverbindung Titantetrachlorid darstellt.

10. Feste Katalysatorkomponente nach Anspruch 1, wobei der Cyclopolyen-1,3-diether in Mengen im Bereich von 5 bis 20 Molprozent, bezogen auf das Magnesiumhalogenid, vorliegt.

11. Feste Katalysatorkomponente nach Anspruch 1, wobei das Mg/Ti-Verhältnis 30:1 bis 4:1 ist.

12. Katalysator für die Polymerisation von Olefinen, umfassend das Produkt der Reaktion von:
a) der festen Katalysatorkomponente von Anspruch 1 mit
b) einer Al-Alkyl-Verbindung und gegebenenfalls
c) einer Elektronendonorverbindung, die von Cyclopolyen-1,3-diethern verschieden ist.

13. Katalysator nach Anspruch 12, wobei die Al-Alkyl-Verbindung b) ein Al-Trialkyl darstellt.

14. Katalysator nach Anspruch 12, wobei die Elektronendonorverbindung c) ausgewählt ist aus der Gruppe, bestehend aus Siliziumverbindungen, die mindestens eine Si-OR-Bindung enthalten, wobei R einen Kohlenwasserstoffrest darstellt, 2,2,6,6-Tetramethylpiperidin, 2,6-Diisopropylpiperidin und Carbonsäureestern.

15. Katalysator nach Anspruch 12, wobei die Elektronendonorverbindung c) ausgewählt ist aus den Verbindungen der allgemeinen Formel 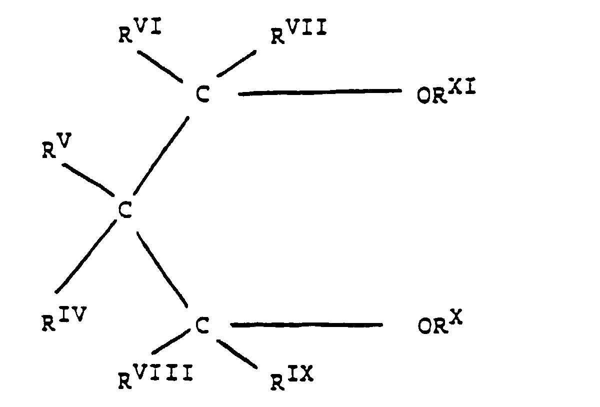 worin R^{IV}, R^{V}, R^{VI}, R^{VII}, R^{VIII} und R^{IX} gleich oder verschieden sind und Wasserstoff, lineare oder verzweigte C₁-C₁₈-Alkyl-, C₃-C₁₈-Cycloalkyl-, C₆-C₁₈-Aryl-, C₇-C₁₈-Aralkyl- oder Alkarylreste darstellen, mit der Maßgabe, daß nur einer der Reste von R^{IV} und R^{V} Wasserstoff sein kann; R^{X} und R^{XI} die gleiche Bedeutung wie R^{IV} und R^{V} aufweisen, mit Ausnahme für Wasserstoff, mit der Maßgabe, daß, wenn die Reste von R^{V} bis R^{IX} Wasserstoff darstellen und R^{X} und R^{XI} Methyl darstellen, R^{IV} nicht Methyl darstellt; darüber hinaus zwei oder mehrere der Reste R^{VI} bis R^{XI} unter Bildung einer cyclischen Struktur verbunden sein können.

16. Katalysator für die Polymerisation von Olefinen, umfassend das Produkt der Reaktion zwischen:
a¹) einer festen Katalysatorkomponente, umfassend ein Magnesiumhalogenid in aktiver Form und getragen darauf eine Titanverbindung, die mindestens eine Ti-Halogen-Bindung enthält, und eine Elektronendonorverbindung;
b) eine Al-Alkyl-Verbindung;
c) einem Cyclopolyen-1,3-diether als äußere Elektronendonorverbindung, in dem nur das Kohlenstoffatom in Stellung 2 zu einer cyclischen oder polycyclischen Struktur, aufgebaut aus 5, 6 oder 7 Kohlenstoffatomen oder 5-n oder 6-n' Kohlenstoffatomen und n Atomen von Stickstoff bzw. n' Heteroatomen, ausgewählt aus der Gruppe, bestehend aus N, O, S und Si, wobei n 1 oder 2 ist und n' 1, 2 oder 3 ist, gehört, wobei die Struktur 2 oder 3 Ungesättigtheiten enthält und eine Cyclopolyen-Struktur bereitstellt und gegebenenfalls mit weiteren cyclischen Strukturen kondensiert ist oder mit einem oder mehreren Substituenten, ausgewählt aus der Gruppe, bestehend aus linearen oder verzweigten Alkylresten, Cycloalkyl-, Aryl-, Aralkyl-, Alkarylresten und Halogenatomen, substituiert ist oder mit weiteren cyclischen Strukturen kondensiert ist und mit einem oder mehreren der vorstehend erwähnten Substituenten, die ebenfalls an die kondensierten cyclischen Strukturen gebunden sein können, substituiert ist, wobei einer oder mehrere der vorstehend erwähnten Alkyl-, Cycloalkyl-, Aryl-, Aralkyl- oder Alkarylreste und der kondensierten cyclischen Strukturen gegebenenfalls ein oder mehrere Heteroatome als Ersatz für Kohlenstoff- oder Wasserstoffatome oder beide enthalten.

17. Katalysator nach Anspruch 16, wobei die Substituenten in dem Cyclopolyen-1,3-diether c) ausgewählt sind aus der Gruppe, bestehend aus linearen oder verzweigten C₁-C₂₀-Alkylresten, C₃-C₂₀-Cycloalkyl-, C₆-C₂₀-Aryl-, C₇-C₂₀-Aralkyl- und C₇-C₂₀-Alkarylresten; Cl und F.

18. Katalysator nach Anspruch 16, wobei der Cyclopolyen-1,3-diether c) ausgewählt ist aus Verbindungen der allgemeinen Formel 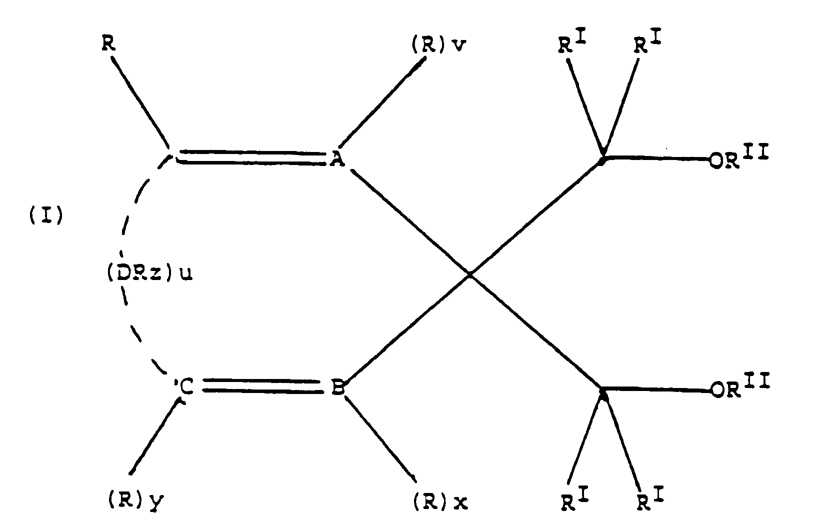 worin A, B, C und D Kohlenstoffatome oder Heteroatome, ausgewählt aus der Gruppe, bestehend aus N, O, S und Si, darstellen; v, x und y 0 oder 1 sind; u und z 0 oder 1 oder 2 sind; mit der Maßgabe, daß, wenn u = 0:
i) A, B und C Kohlenstoffatome darstellen und v, x und y 1 sind; oder
ii) A ein Stickstoffatom darstellt, B und C Kohlenstoffatome darstellen, v 0 ist und x und y 1 sind; oder
iii) A und B Stickstoffatome darstellen, C ein Kohlenstoffatom darstellt, v und x 0 sind und y 1 ist; oder
iv) A und B Kohlenstoffatome darstellen, C ein Stickstoffatom darstellt, v und x 1 sind und y 0 ist;
und wenn u = 1:
1) A, B, C und D Kohlenstoffatome darstellen, v, x und y 1 sind und z 2 ist; oder
2) A und B Kohlenstoffatome darstellen, C ein Stickstoffatom darstellt, D ein Sauerstoffatom darstellt, v und x 1 sind, y und z 0 sind; oder
3) A, B und C Kohlenstoffatome darstellen, D ein Sauerstoff-, Stickstoff-, Schwefel- oder Siliziumatom darstellt, v, x und y 1 sind und z 0 ist, wenn D ein Sauerstoff- oder Schwefelatom darstellt, 1 ist, wenn D ein Stickstoffatom darstellt, und 2 ist, wenn D ein Siliziumatom darstellt;
wenn u = 2:
A, B und C Kohlenstoffatome darstellen, D zwei Kohlenstoffatome, die jeweils durch Einfach- oder Doppelbindung aneinander gebunden sind, wiedergeben, v, x und y 1 sind und z 1 ist, wenn das Paar Kohlenstoffatome D durch eine Doppelbindung gebunden ist, und 2 sind, wenn das Paar durch eine Einfachbindung gebunden ist; die Reste R und R^{I}, gleich oder verschieden, ausgewählt sind aus der Gruppe, bestehend aus Wasserstoff, Halogenatomen, linearen oder verzweigten C₁-C₂₀-Alkylresten, C₃-C₂₀-Cycloalkyl-, C₆-C₂₀-Aryl-, C₇-C₂₀-Alkaryl- und C₇-C₂₀-Aralkylresten; die Reste R^{II}, gleich oder verschieden, ausgewählt sind aus der Gruppe, bestehend aus linearen oder verzweigten C₁-C₂₀-Alkylresten, C₃-C₂₀-Cycloalkyl-, C₆-C₂₀-Aryl-, C₇-C₂₀-Alkaryl- und C₇-C₂₀-Aralkylresten, und zwei oder mehrere der Reste R zur Bildung von gesättigten oder ungesättigten, kondensierten cyclischen Strukturen, die gegebenenfalls mit Resten R^{III}, ausgewählt aus der Gruppe, bestehend aus Halogenatomen, linearen oder verzweigten C₁-C₂₀-Alkylresten, C₃-C₂₀-Cycloalkyl-, C₆-C₂₀-Aryl-, C₇-C₂₀-Alkaryl- und C₇-C₂₀-Aralkylresten, substituiert sind, aneinander gebunden sein können; wobei die Reste R bis R^{III} gegebenenfalls ein oder mehrere Heteroatome als Ersatz für Kohlenstoff- oder Wasserstoffatome oder beide enthalten.

19. Katalysator nach Anspruch 18, wobei der Cyclopolyen-1,3-diether c) ausgewählt ist aus Verbindungen der allgemeinen Formel: 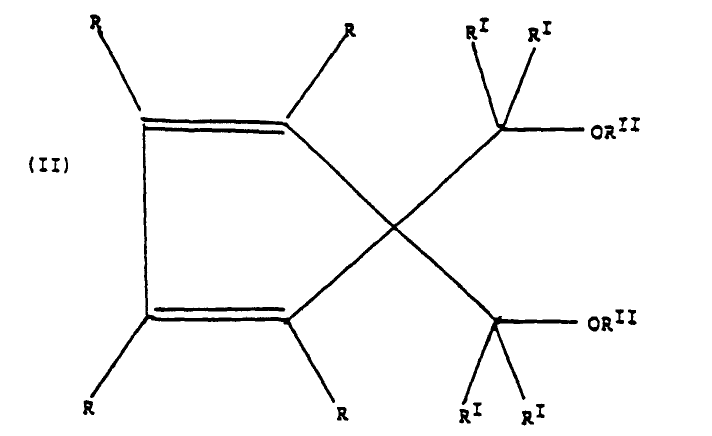 worin die Reste R und R^{I}, gleich oder verschieden, ausgewählt sind aus der Gruppe, bestehend aus Wasserstoff, Halogenatomen, linearen oder verzweigten C₁-C₂₀-Alkylresten, C₃-C₂₀-Cycloalkyl-, C₆-C₂₀-Aryl-, C₇-C₂₀-Alkaryl- und C₇-C₂₀-Aralkylresten; die Reste R^{II}, gleich oder verschieden, ausgewählt sind aus der Gruppe, bestehend aus linearen oder verzweigten C₁-C₂₀-Alkylresten, C₃-C₂₀-Cycloalkyl-, C₆-C₂₀-Aryl-, C₇-C₂₀-Alkaryl- und C₇-C₂₀-Aralkylresten, und zwei oder mehrere der Reste R zur Bildung gesättigter oder ungesättigter, kondensierter, cyclischer Strukturen, die gegebenenfalls mit Resten R^{III}, ausgewählt aus der Gruppe, bestehend aus Halogenatomen, linearen oder verzweigten C₁-C₂₀-Alkylresten, C₃-C₂₀-Cycloalkyl-, C₆-C₂₀-Aryl-, C₇-C₂₀-Alkaryl- und C₇-C₂₀-Aralkylresten, substituiert sind, aneinander gebunden sein können; wobei die Reste R bis R^{III} gegebenenfalls ein oder mehrere Heteroatome als Ersatz für Kohlenstoff- oder Wasserstoffatome oder beide enthalten.

20. Katalysator nach Anspruch 19, wobei der Cyclopolyen-1,3-diether c) ausgewählt ist aus der Gruppe, bestehend aus 1,1-Bis(methoxymethyl)-cyclopentadien; 1,1-Bis(methoxymethyl)-2,3,4,5,-tetramethylcyclopentadien; 1,1-Bis(methoxymethyl)-2,3,4,5,-tetraphenylcyclopentadien; 1,1-Bis(methoxymethyl)inden; 1,1-Bis(methoxymethyl)-2,3-dimethylinden; 1,1-Bis(methoxymethyl)-4,7-dimethylinden; 1,1-Bis(methoxymethyl)-4-phenyl-2-methylinden; 1,1-Bis(methoxymethyl)-7-(3,3,3-trifluorpropyl)inden; 1,1-Bis(methoxymethyl)-7-trimethylsilylinden; 1,1-Bis(methoxymethyl)-7-trifluormethylinden; 1,1-Bis(methoxymethyl)-7-methylinden; 1,1-Bis(methoxymethyl)-7-cyclopentylinden; 1,1-Bis(methoxymethyl)-7-isopropylinden; 1,1-Bis(methoxymethyl)-7-cyclohexylinden; 1,1-Bis(methoxymethyl)-7-tert-butylinden; 1,1-Bis(methoxymethyl)-7-tert-butyl-2-methylinden; 1,1-Bis(methoxymethyl)-7-phenylinden; 1,1-Bis(methoxymethyl)-2-phenylinden; 9,9-Bis(methoxymethyl)fluoren; 9,9-Bis(methoxymethyl)-2,3,6,7-tetramethylfluoren; 9,9-Bis(methoxymethyl)-2,3,4,5,6,7-hexafluorfluoren; 9,9-Bis(methoxymethyl)-2,3-benzofluoren; 9,9-Bis(methoxymethyl)-2,3,6,7-dibenzofluoren; 9,9-Bis(methoxymethyl)-2,7-diisopropylfluoren; 9,9-Bis(methoxymethyl)-1,8-dichlorfluoren; 9,9-Bis(methoxymethyl)-2,7-dicyclopentylfluoren; 9,9-Bis(methoxymethyl)-1,8-difluorfluoren; 9,9-Bis(methoxymethyl)-1,2,3,4-tetrahydrofluoren; 9,9-Bis(methoxymethyl)-1,2,3,4,5,6,7,8-octahydrofluoren; 9,9-Bis(methoxymethyl)-4-tert-butylfluoren; 1,1-Bis(α-methoxybenzyl)inden; 1,1-Bis(1'-methoxyethyl)-5,6-dichlorinden; 9,9-Bis(α-methoxybenzyl)fluoren; 9,9-Bis(1'-methoxyethyl)fluoren; 9-(Methoxymethyl)-9-(1'-methoxyethyl)-2,3,6,7-tetrafluorfluoren; 9-Methoxymethyl-9-pentoxymethylfluoren; 9-Methoxymethyl-9-ethoxymethylfluoren; 9-Methoxymethyl-9-(1'methoxyethyl)-fluoren.

21. Katalysator nach Anspruch 18, wobei der Cyclopolyen-1,3-diether c) ausgewählt ist aus der Gruppe, bestehend aus 9,9-Bis(methoxymethyl)xanthen und 9,9-Bis(methoxymethyl)-2,3,6,7-tetramethylxanthen.

22. Katalysator nach Anspruch 16, wobei die Al-Alkyl-Verbindung ein Al-Trialkyl ist.

23. Katalysator nach Anspruch 16, wobei die Titanverbindung, die auf der festen Katalysatorkomponente a¹) getragen wird, ausgewählt ist aus der Gruppe, bestehend aus Halogeniden und Halogenalkoholaten.

24. Katalysator nach Anspruch 16, wobei die Elektronendonorverbindung, die auf der festen Katalysatorkomponente a¹) getragen wird, eine Lewis-Base ist, die eine oder mehrere elektronegative Gruppen enthält, worin die Elektronendonor-atome ausgewählt sind aus der Gruppe, bestehend aus N, O, S, P, As oder Sn.

25. Katalysator nach Anspruch 24, wobei die Elektronendonorverbindung, die auf der festen Katalysatorkomponente a¹) getragen wird, eine Elektronendonorverbindung ist, die mit Al-Triethyl aus der Katalysatorkomponente a¹) für mindestens 70 Molprozent extrahiert werden kann, wobei die Oberfläche (B.E.T.) des festen Produkts der Extraktion mindestens 20 m²/g ist.

26. Katalysator nach Anspruch 24, wobei die Elektronendonorverbindung, die auf der festen Katalysatorkomponente a¹) getragen wird, ein Phthalsäureester ist.

27. Katalysator nach Anspruch 24, wobei die Elektronendonorverbindung, die auf der festen Katalysatorkomponente a¹) getragen wird, ein Ether, der zwei oder mehrere Ethergruppen enthält, ist, und der unter Standardbedingungen mit wasserfreiem Magnesiumchlorid für weniger als 60 mMol pro 100 g Chlorid komplexiert wird und mit TiCl₄ keine Substitutionsreaktionen eingeht oder sie nur für weniger als 50 Molprozent eingeht.

28. Katalysator nach Anspruch 24, wobei die Elektronendonorverbindung, die auf der festen Katalysatorkomponente a¹) getragen wird, einen Cyclopolyen-1,3-diether darstellt, in dem nur das Kohlenstoffatom in Stellung 2 zu einer cyclischen oder polycyclischen Struktur, aufgebaut aus 5, 6 oder 7 Kohlenstoffatomen oder 5-n oder 6-n' Kohlenstoffatomen und n Atomen von Stickstoff bzw. n' Heteroatomen, ausgewählt aus der Gruppe, bestehend aus N, O, S und Si, wobei n 1 oder 2 ist und n' 1, 2 oder 3 ist, gehört, wobei die Struktur 2 oder 3 Ungesättigtheiten enthält und eine Cyclopolyen-Struktur bereitstellt und gegebenenfalls mit weiteren cyclischen Strukturen kondensiert ist oder mit einem oder mehreren Substituenten, ausgewählt aus der Gruppe, bestehend aus linearen oder verzweigten Alkylresten, Cycloalkyl-, Aryl-, Aralkyl-, Alkarylresten und Halogenatomen, substituiert ist oder mit weiteren cyclischen Strukturen kondensiert ist und mit einem oder mehreren der vorstehend erwähnten Substituenten, die ebenfalls an die kondensierten cyclischen Strukturen gebunden sein können, substituiert ist, wobei einer oder mehrere der vorstehend erwähnten Alkyl-, Cycloalkyl-, Aryl-, Aralkyl- oder Alkarylreste und der kondensierten cyclischen Strukturen gegebenenfalls ein oder mehrere Heteroatome als Ersatz für Kohlenstoff- oder Wasserstoffatome oder beide enthalten.

29. Verfahren für die Polymerisation von Olefinen CH₂=CHR, worin R Wasserstoff oder einen C₁-C₆-Kohlenwasserstoffalkylrest oder einen Arylrest bedeutet oder Gemischen dieser Olefine oder dieser Olefine und Diolefine, wobei das Verfahren in der Flüssigphase in An- oder Abwesenheit eines aliphatischen oder aromatischen Kohlenwasserstoff-Lösungsmittels oder in der Gasphase oder durch Kombinieren von Polymerisationsstufen in der Flüssigphase und in der Gasphase und in Anwesenheit von einem Katalysator gemäß Ansprüchen 12 und 16 ausgeführt wird.

## Revendications

1. Un constituant de catalyseur solide pour la polymérisation d'oléfines, comprenant un halogénure de magnésium sous forme activée, et supporté sur celui-ci, un dérivé de titane comprenant au moins une liaison Ti-halogène et un 1,3-diether-cyclopolyénique en tant que dérivé donneur d'électron interne, dans lequel seul l'atome de carbone en position 2 appartient à une structure cyclique ou polycyclique constituée de 5, 6 ou 7 atomes de carbone ou bien 5-n ou 6-n' atomes de carbone et respectivement n atomes d'azote et n' hétéroatomes choisis dans le groupe consistant en N, O, S et Si, où n'est égal à 1 ou 2 et n'est égal à 1, 2 ou 3, ladite structure contenant deux ou trois insaturations et formant une structure cyclopolyénique et étant éventuellement condensée avec d'autres structures cycliques, ou substituée par un ou plusieurs substituants choisis dans le groupe consistant en radicaux alkyles linéaires ou ramifiés ; radicaux cycloalkyles, aryle, aralkyle, alkaryle et halogènes, ou étant condensée avec d'autres structures cycliques et substituée par un ou plusieurs des substituants cités ci-dessus qui peuvent également être liés aux structures cycliques condensées ; un ou plusieurs desdits radicaux ci-dessus alkyle, cycloalkyle, aryle, aralkyle ou alkaryle et les structures cycliques condensées contenant éventuellement un ou plusieurs hétéroatomes en tant que substituts d'atomes de carbone ou d'hydrogène ou des deux.

2. Le composant de catalyseur solide selon la revendication 1, dans lequel les atomes de carbone en position 1 et 3 dans le 1,3-diether cyclopolyénique sont secondaires.

3. Le composant de catalyseur solide selon la revendication 1, dans lequel les substituants dans le 1,3-diether cyclopolyénique sont choisis dans le groupe consistant en radicaux alkyles en C₁-C₂₀ linéaires ou ramifiés ; cycloalkyles en C₃-C₂₀ ; aryles en C₆-C₂₀ ; aralkyles en C₇-C₂₀ et alkaryles en C₇-C₂₀ ; Cl et F.

4. Le composant de catalyseur solide selon la revendication 1, dans lequel le 1,3-diether est choisi parmi les composés de formule générale : 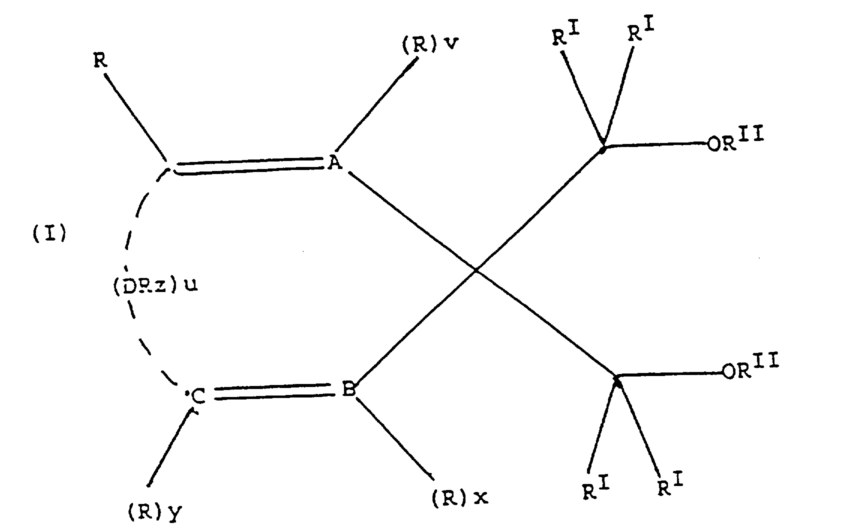 où A, B, C, et D sont des atomes de carbone où des hétéroatomes choisis dans le groupe consistant en N, O, S et Si ; v, x et y sont égaux à 0 ou 1 ; u et z sont égaux à 0 ou 1 ou 2 ;
avec cette condition que, si u = 0 :
i) A, B, C sont des atomes de carbone et v, x et y sont égaux à 1 ; ou bien
ii) A est un atome d'azote, B et C sont des atomes de carbone, v est égal à 0 et x et y sont égaux à 1 ; ou bien
iii) A et B sont des atomes d'azote, C est un atome de carbone, v et x sont égaux à 0 et y est égal à 1 ; ou bien
iv) A et B sont des atomes de carbone, C est un atome d'azote, v et x sont égaux à 1 et y est égal à 0 ;
si u = 1 :
1) A, B, C et D sont des atomes de carbone, v, x, et y sont égaux à 1 et z est égal à 2 ou bien
2) A et B sont des atomes de carbone ; C est un atome d'azote, D est un atome d'oxygène, v et x sont égaux à 1, y et z sont égaux à 0 ; ou bien
3) A, B et C sont des atomes de carbone, D est un atome d'oxygène, d'azote, de soufre ou de silicium, v, x et y sont égaux à 1 et z est égal à 0 quand D est un atome d'oxygène ou de soufre, égal à 1 lorsque D est un atome d'azote, et égal à 2 lorsque D est un atome de silicium ;
si u = 2 :
A, B et C sont des atomes de carbone, D représente deux atomes reliés ensemble par une liaison simple ou double, v, x et y sont égaux à 1 et z est égal à I quand le couple d'atomes de carbone D est lié par une double liaison et est égal à 2 quand ledit couple est lié par une liaison simple; les radicaux R et R^{I}, identiques ou différents, sont choisis dans le groupe consistant en hydrogène ; halogènes ; radicaux alkyles en C₁-C₂₀ linéaires ou ramifiés ; radicaux cycloalkyles en C₃-C₂₀, aryle en C₆-C₂₀, alkaryle en C₇-C₂₀ et aralkyle en C₇-C₂₀ ; les radicaux R^{II}, identiques ou différents, sont choisis dans le groupe consistant en radicaux alkyles en C₁-C₂₀ linéaires ou ramifiés ;radicaux cycloalkyles en C₃-C₂₀, aryles en C₆-C₂₀, alkaryles en C₇-C₂₀ et aralkyles en C₇-C_{20,} et deux ou plusieurs des radicaux R peuvent être unis ensemble pour former des structures cycliques condensées, saturées ou insaturées, éventuellement substituées par des radicaux R^{III} choisis dans le groupe consistant en halogènes, radicaux alkyles en C₁-C₂₀ linéaires ou ramifiés, radicaux cycloalkyles en C₃-C₂₀, aryles en C₆-C₂₀, alkaryles en C₇-C₂₀ et aralkyles en C₇-C₂₀ ; lesdits radicaux en R^{I}-R^{III} pouvant éventuellement comporter un ou plusieurs hétéroatomes en tant que substituts d'atomes de carbone ou d'hydrogène, ou les deux.

5. Le composant de catalyseur solide selon la revendication 4, dans lequel le 1,3-diéther cyclopolyénique est choisi parmi les composés de formule générale : 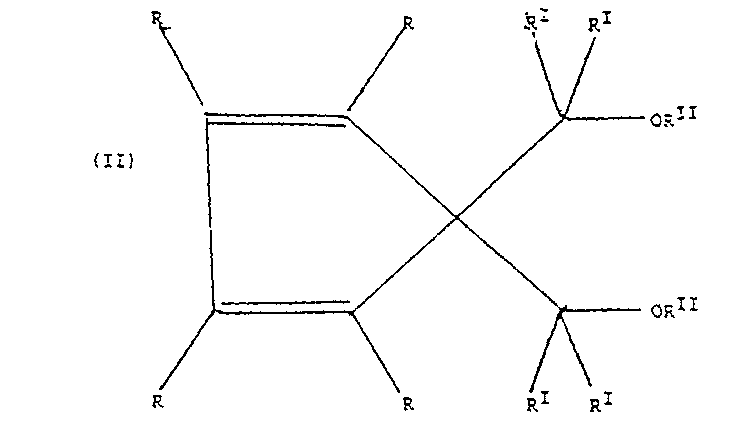 où les radicaux R et R^{I}, identiques ou différents, sont choisis dans le groupe consistant en hydrogène ; halogène ; radicaux alkyles en C₁-C₂₀, linéaires ou ramifiés ; radicaux cycloalkyle en C₃-C₂₀, aryle en C₆-C₂₀, alkaryle en C₇-C₂₀ et aralkyle en C₇-C₂₀ ; les radicaux R^{II} identiques ou différents sont choisis dans le groupe consistant en radicaux alkyles en C₁-C₂₀, linéaires ou ramifiés ; radicaux cycloalkyle en C₃-C₂₀, aryle en C₆-C₂₀, alkaryle en C₇-C₂₀ et aralkyle en C₇-C₂₀, et deux ou plusieurs des radicaux R peuvent être liés ensemble pour former des structures cycliques condensées, saturées ou insaturées, éventuellement substituées par des radicaux R^{III} choisis dans le groupe consistant en halogène ; radicaux en C₁-C₂₀, linéaires ou ramifiés ; radicaux cycloalkyles en C₃-C₂₀, aryle en C₆-C₂₀, alkaryle en C₇-C₂₀ et aralkyle en C₇-C₂₀; les radicaux de R à R^{III} comportant éventuellement un ou plusieurs hétéroatomes en tant que substituts d'atomes de carbone ou d'hydrogène, ou des deux.

6. Le composant de catalyseur solide selon la revendication 5, dans lequel le 1,3-diéther cyclopolyénique est choisi dans le groupe consistant en :
1,1-bis(methoxymethyl)-cyclopentadiene;
1,1-bis(methoxymethyl)-2,3,4,5-tetramethylcyclopentadiene;
1,1-bis(methoxymethyl)-2,3,4,5-tetraphenylcyclopentadiene;
1,1-bis(methoxymethyl)indene;
1,1-bis(methoxymethyl)-2,3-dimethylindene;
1,1-bis(methoxymethyl)-4,7-dimethylindene;
1,1-bis(methoxymethyl)-4-phenyl-2-methylindene;
1,1-bis(methoxymethyl)-7-(3,3,3-trifluoropropyl)indene;
1,1-bis(methoxymethyl)-7-trimethylsilylindene;
1,1-bis(methoxymethyl)-7-trifluoromethylindene;
1,1-bis(methoxymethyl)-7-methylindene;
1,1-bis(methoxymethyl)-7-cyclopenthylindene;
1,1-bis(methoxymethyl)-7-isopropylindene;
1,1-bis(methoxymethyl)-7-cyclohexylindene;
1,1-bis(methoxymethyl)-7-tert-butylindene;
1,1-bis(methoxymethyl)-7-tert-butyl-2-methylindene;
1,1-bis(methoxymethyl)-7-phenylindene;
1,1-bis(methoxymethyl)-2-phenylindene;
9,9-bis(methoxymethyl)fluorene;
9,9-bis(methoxymethyl)-2,3,6,7-tetramethylfluorene;
9,9-bis(methoxymethyl)-2,3,4,5,6,7-hexafluorofluorene;
9,9-bis(methoxymethyl)-2,3-benzofluorene
9,9-bis(methoxymethyl)-2,3,6,7-dibenzofluorene;
9,9-bis(methoxymethyl)-2,7-diisopropylfluorene;
9,9-bis(methoxymethyl)-1,8-dichlorofluorene;
9,9-bis(methoxymethyl)-2,7-dicyclopentylfluorene;
9,9-bis(methoxymethyl)-1,8-difluorofluorene;
9,9-bis(methoxymethyl)-1,2,3,4-tetrahydrofluorene;
9,9-bis(methoxymethyl)-1,2,3,4,5,6,7,8-octahydrofluorene;
9,9-bis(methoxymethyl))-4-tert-butylfluorene.

7. Le composant de catalyseur solide selon la revendication 4, dans lequel le 1,3-diéther cyclopolyénique est choisi dans le groupe consistant en 9,9-bis(méthoxyméthyl) xanthène et 9,9-bis (méthoxyméthyl) -2,3,6,7 -tetraméthyl xanthène.

8. Le composant de catalyseur solide selon la revendication 1, dans lequel le dérivé de titane est choisi dans le groupe consistant en les halogénures et halogéno-alcoolates.

9. Le composant de catalyseur solide selon la revendication 8, dans lequel le dérivé de titane est le tetrachlorure de titane.

10. Le composant de catalyseur solide selon la revendication 1, dans lequel le 1,3-diéther cyclopolyénique est présent à raison de 5 à 20% moles par rapport à l'halogéneur de magnesium.

11. Le composant de catalyseur solide selon la revendication 1, dans lequel le rapport Mg/Ti est compris entre 30/1 et 4/1.

12. Un catalyseur pour la polymérisation d'oléfines comprenant le produit de la réaction de :
a) le composant de catalyseur solide selon la revendication 1, avec
b) un dérivé alkyl-aluminium et le cas échéant
c) un composé donneur d'électrons autre que les 1,3-diéther cyclopolyéniques.

13. Le catalyseur selon la revendication 12, dans lequel le dérivé alkyl-Al b) est un tri-alkyl Al.

14. Le catalyseur selon la revendication 12, dans lequel le composé donneur d'électrons c) est choisi dans le groupe consistant en dérivé du silicium contenant au moins une liaison Si-OR, où R est un radical hydrocarboné, 2,2,6,6-tetraméthylpipéridine, 2,6-diisopropylpipéridine, et des esters d'acide carboxyliques.

15. Le catalyseur selon la revendication 12, dans lequel le composé donneur d'électrons c) est choisi parmi les composés répondant à la formule générale 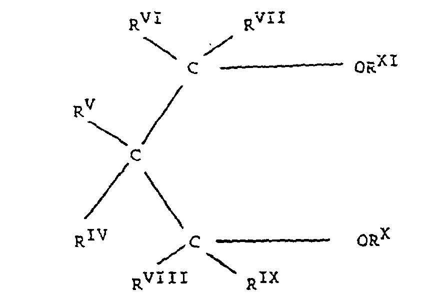 où R^{IV}, R^{V}, R^{VI}, R^{VII}, R^{VIII} et R^{IX} sont identiques ou différents, et sont des hydrogènes ; des radicaux alkyles linéaires ou ramifiés en C₁-C₁₈, cycloalkyles en C₃-C₁₈, aryles en C₆-C₁₈, aralkyles en C₇-C₁₈ ou alkaryles en C₇-C₁₈, à condition que un seul des R^{IV} et R⁵ soit un hydrogène ; R^{X} et R^{XI} ont la même signification que R^{IV} et R^{V} sauf pour l'hydrogène, condition que si les radicaux R^{V} à R^{IX} sont des hydrogènes et R^{X} et T^{XI} sont des méthyles, R^{IV} n'est pas un méthyle ; en outre, deux ou davantage des radicaux R^{VI} à R^{IX} peuvent être unis pour former une structure cyclique.

16. Un catalyseur pour la polymérisation des oléfines, comprenant le produit de la réaction entre :
a¹) un composant de catalyseur solide comprenant un halogénure de magnésium sous forme active et, supporté sur celui-ci, un dérivé de titane comprenant au moins une liaison Ti-halogène et un composé donneur d'électron ;
b) un dérivé alkyl-Al ;
c) un 1,3-diéther cyclopolyénique en tant que composé donneur d'électron externe dans lequel seul l'atome de carbone en position 2 appartient à une structure cyclique ou polycyclique constituée de 5, 6 ou 7 atomes de carbone ou de 5-n ou 6-n' atomes de carbone et respectivement n atomes d'azote et n' hétéroatomes choisis dans le groupe consistant en N, O, S et Si, où n est égal à 1 ou 2 et n' est égal à 1, 2 ou 3, ladite structure comportant deux ou trois insaturations et constituant une structure cyclopolyénique, et le cas échéant, étant condensée avec d'autres structures cycliques, ou substituée par un ou plusieurs substituants choisis dans le groupe consistant en radicaux alkyles linéaires ou ramifiés ; radicaux cycloalkyle, aryle, aralkyle, et des halogènes ou étant condensée avec d'autres structures cycliques et substituée par un ou plusieurs des substituants cités ci-dessus qui peuvent être également être liés à structures condensées; un ou plusieurs des radicaux ci-dessus alkyles, cycloalkyles, aryles, aralkyles ou alkaryles et les structures cycliques condensées contenant éventuellement un ou plusieurs hétéroatomes en tant que substituts des atomes de carbone ou d'hydrogène, ou des deux.

17. Le catalyseur selon la revendication 16, dans lequel les substituants dans le 1,3-diéther cyclopolyénique c) sont choisis dans le groupe consistant en radicaux alkyles en C₁-C₂₀, linéaires ou ramifiés ; radicaux cycloalkyles en C₃-C₂₀, aryles en C₆-C_{20,} aralkyles en C₇-C₂₀ et alkaryles en C₇-C₂₀ ; Cl et F.

18. Le catalyseur selon la revendication 16, dans lequel le 1,3-diéther cyclopolyénique c) est choisi parmi les composés de formule générale : 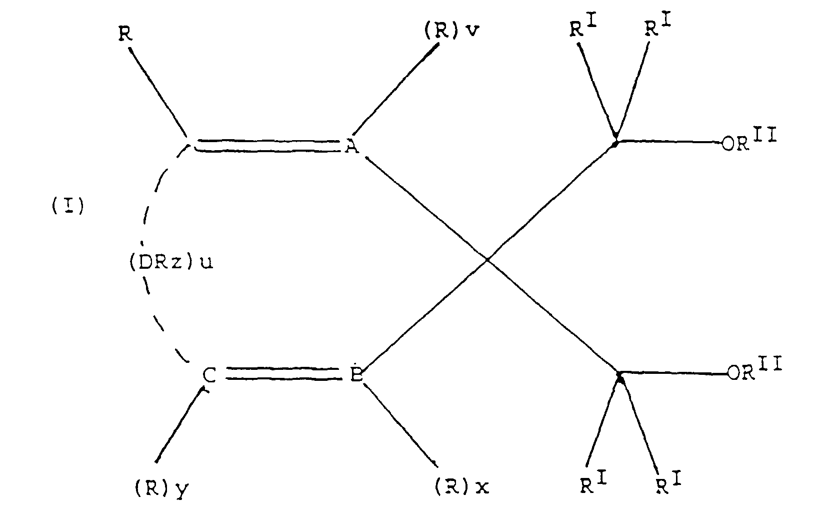 où A, B, C et D sont des atomes de carbone ou des hétéroatomes choisis dans le groupe consistant en N, O, S et Si ; v, x et y sont égaux à 0 ou à 1 ; u ou z sont soit égaux à 0 ou 1 ou 2, pour autant que si u = 0 :
i A, B, C sont des atomes de carbone et v, x et y sont égaux à 1 ; ou bien
ii) A est un atome d'azote, B et C sont des atomes de carbone, v est égal à 0 et x et y sont égaux à 1 ; ou bien
iii) A et B sont des atomes d'azote, C est un atome de carbone, v et x sont égaux à 0 et y est égal à 1 ; ou bien
iv) A et B sont des atomes de carbone, C est un atome d'azote, v et x sont égaux à 1 et y est égal 0 ;
si u = 1 :
1) A, B, C et D sont des atomes de carbone, v, x et y sont égaux à 1, et z est égal à 2 ; ou bien
2) A et B sont des atomes de carbone, C est un atome d'azote, D est un atome d'oxygène, v et x sont égaux à 1 et y et z sont égaux à 0 ; ou bien
3) A, B, C dont des atomes de carbones, D est un atome d'oxygène, d'azote, de soufre ou de silicium, v, x et y sont égaux à 1 et z est égal à 0 quand D est un atome d'oxygène ou de soufre, égal à 1 quand D est un atome d'azote et égal à 2 quand D est un atome de silicium ;
si u = 2 :
A, B et C sont des atomes de carbone, D représente deux atomes de carbone liés ensemble par une liaison simple ou double, v, x et y sont égaux à 1 et z est égal à 1 lorsque le couple d'atomes de carbone D est uni par une double liaison et égal à 2 lorsque ledit couple est uni par une simple liaison ; les radicaux R^{I} et R^{II}, identiques ou différents, sont choisis dans le groupe consistant en hydrogène ; halogène ; radicaux alkyles en C₁-C₂₀, linéaires ou ramifiés ; radicaux cycloalkyle en C₃-C₂₀-aryle en C₆-C₂₀, alkaryle en C₇-C₂₀ et aralkyle en C₇C₂₀; les radicaux R^{II}, identiques ou différents, sont choisis dans le groupe consistant en radicaux alkyles en C₁-C₂₀, linéaires ou ramifiés ; radicaux cycloalkyle en C₃-C₂₀, aryle en C₆-C₂₀-alkaryle en C₇-C₂₀ et aralkyle en C₇-C₂₀ et deux ou plusieurs des radicaux R peuvent être unis ensemble pour former des structures cycliques condensées, saturées ou insaturées, éventuellement substituées par des radicaux R^{III} choisis dans le groupe consistant en halogène ; radicaux alkyles en C₁-C₂₀, linéaires ou ramifiés : radicaux cycloalkyle en C₃-C₂₀, aryle en C₆-C₂₀, alkaryle en C₇-C₂₀ et aralkyle en C₇-C₂₀ ; les radicaux de R^{I} à R^{III} pouvant contenir éventuellement un plusieurs hétéroatomes en tant que substituts d'atomes de carbone ou d'hydrogène, ou des deux.

19. Le catalyseur selon la revendication 18, dans lequel le 1,3-diether cyclopolyénique c) est choisi parmi les composés de formule générale de : 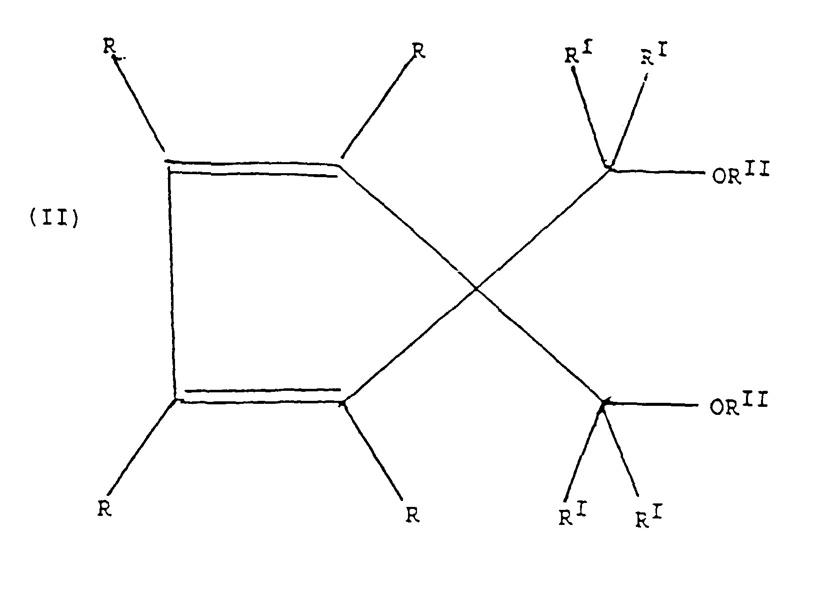 où les radicaux R et R^{I}, identiques ou différents, sont choisis dans le groupe consistant en hydrogène ; halogènes ; radicaux alkyles linéaires ou ramifiés en C₁-C₂₀ ;radicaux cycloalkyles en C₃-C₂₀, aryles en C₆-C₂₀, alkaryles en C₇-C₂₀, et aralkyle en C₇-C₂₀ ; les radicaux R^{II}, identiques ou différents, sont choisis dans le groupe consistant en radicaux alkyles en C₁-C₂₀ linéaires ou ramifiés ; radicaux cycloalkyles en C₃-C₂₀, aryles en C₆-C_{20,} alkaryles en C₇-C₂₀ et aralkyles en C₇-C₂₀ et deux ou plusieurs des radicaux R peuvent être unis ensemble pour former des structures cycliques condensées, saturées ou insaturées, éventuellement substituées par des radicaux R^{III} choisis dans le groupe consistant en halogènes ; radicaux alkyles en C₁-C₂₀, linéaires ou ramifiées ; radicaux cycloalkyles en C₃-C₂₀, aryles en C₆-C₂₀, alkaryles en C₇-C₂₀ et aralkyle en C₇-C₂₀ ; lesdits radicaux de R^{I} à R^{III} comportant éventuellement un ou plusieurs hétéroatomes en tant que substituts d'atomes de carbone ou d'hydrogène, ou des deux.

20. Le catalyseur selon la revendication 19, dans lequel le 1,3-diether cyclopolyénique c) est choisi dans le groupe consistant en : diether c) is selected from the group consisting of:
1,1-bis(methoxymethyl)-cyclopentadiene;
1,1-bis(methoxymethyl)-2,3,4,5-tetramethylcyclopentadiene;
1,1-bis(methoxymethyl)-2,3,4,5-tetraphenylcyclopentadiene;
1,1-bis(methoxymethyl)indene;
1,1-bis(methoxymethyl)-2,3-dimethylindene;
1,1-bis(methoxymethyl)-4,7-dimethylindene;
1,1-bis(methoxymethyl)-4-phenyl-2-methylindene;
1,1-bis(methoxymethyl)-7-(3,3,3-trifluoropropyl)indene;
1,1-bis(methoxymethyl)-7-trimethylsilylindene;
1,1-bis(methoxymethyl)-7-trifluoromethylindene;
1,1-bis(methoxymethyl)-7-methylindene;
1,1-bis(methoxymethyl)-7-cyclopenthylindene;
1,1-bis(methoxymethyl)-7-isopropylindene;
1,1-bis(methoxymethyl)-7-cyclohexylindene;
1,1-bis(methoxymethyl)-7-tert-butylindene;
1,1-bis(methoxymethyl)-7-tert-butyl-2-methylindene;
1,1-bis(methoxymethyl)-7-phenylindene;
1,1-bis(methoxymethyl)-2-phenylindene;
9,9-bis(methoxymethyl)fluorene;
9,9-bis(methoxymethyl)-2,3,6,7-teciamethylfluorene ;
9,9-bis(methoxymethyl)-2,3,4,5,6,7-hexafluorofluorene;
9,9-bis(methoxymethyl)-2,3-benzofluorene;
9,9-bis(methoxymethyl)-2,3,6,7-dibenzofluorene;
9,9-bis(methoxymethyl)-2,7-diisopropylfluorene;
9,9-bis(methoxymethyl)-1,8-dichlorofluorene;
9,3-bis(methoxyrmethyl)-2,7-dicyclopentylfluorene;
9,9-bis(methoxymethyl)-1,8-difluorofluorene;
9,9-bis(methoxymethyl)-1,2,3,4-tetrahydrofluorene;
9,9-bis(methoxymethyl)-1,2,3,4,5,6,7,8-octahydrofluorene;
9,9-bis(methoxymethyl)-4-tert-butylfluorene;
1,1-bis(α-metoxybenzyl)indene;
1,1-bis(1'-methoxyethyl)-5,6-dichloroindene;
9,9-bis(α-methoxybenzyl)fluorene;
9,9-bis(1'-methoxyethyl)fluorene;
9-(methoxymethyl)-9-(1'-methoxyethyl)-2,3,6,7-tetrafluorofluorene;
9-methoxymethyl-9-pentoxymethylfluorene;
9-methoxymethyl-9-ethoxymethylfluorene;
9-methoxymethyl-9-(1'methoxyethyl)-fluorene;

21. Le catalyseur selon la revendication 18, dans lequel le 1,3-diéther cyclopolyénique c) est choisi dans le groupe consistant en 9,9-bis(méthoxyméthyl)xanthène et 9,9-bis(méthoxyméthyl)-2,3,6,7-tetraxyméthyl xanthène.

22. Le catalyseur selon la revendication 16, dans lequel le dérivé alkyl-Al est un trialkyl-Al.

23. Le catalyseur selon la revendication 16, dans lequel, le dérivé titane supporté sur le composant de catalyseur solide a¹) est choisi dans le groupe consistant en halogéno-alcoolates.

24. Le catalyseur selon la revendication 16, dans lequel le composé donneur d'électrons supporté sur le composant de catalyseur solide a¹) est une base de Lewis comportant un ou plusieurs groupes électro négatifs où les atomes donneurs d'électrons sont choisi dans le groupe consistant en N, O, S, P, As ou Sn.

25. Le catalyseur selon la revendication 24, dans lequel le composé électrodonneur supporté sur le composant de catalyseur solide a¹) est un composé électrodonneur qui peut être extrait par le triethyl-Al du composant de catalyseur a¹) pour au moins 70% en moles, la surface spécifique (B.E.T.) du produit solide de l'extraction étant d'au moins 20m²/g.

26. Le catalyseur selon la revendication 24, dans lequel le composé donneur d'électrons supporté sur ledit composant de catalyseur solide a¹) est un ester d'acide phtalique.

27. La catalyseur selon la revendication 24, dans ledit composé donneur d'électrons supporté sur le composant de catalyseur solide a¹) est un éther comportant deux ou plusieurs groupes éthers et qui, dans des conditions normales. est complexé par le chlorure de magnesium anhydre pour moins de 60 moles par 100 g de chlorure et qui, avec TICl₄, ne subit pas de réaction de substitution, ou ne le fait que pour moins de 50% en moles.

28. Le catalyseur selon la revendication 24, dans lequel le composé donneur d'électrons supporté sur le composant de catalyseur solide a¹) est un 1,3-diéther cyclopolyénique dans lequel seul l'atome de carbone en position 2 appartient à une structure cyclique ou polycyclique constituée de 5, 6 ou 7 atomes de carbone ou 5-n ou 6-n' atome de carbone et respectivement n atomes d'azote et n' hétéroatomes choisis dans le groupe consistant en N, O, S et Si, où n est égal à 1 ou 2 et n' est égal à 1, 2 ou 3, ladite structure comportant deux ou trois insaturations et constituant une structure cyclopolyénique et éventuellement étant condensée avec d'autres structures cycliques, ou substituée par un ou plusieurs substituants solides choisis dans le groupe consistant en radicaux alkyles linéaires ou ramifiés ; radicaux cycloalkyles, aryles, aralkyles, alkaryles et halogènes, ou étant condensée avec d'autres structures cycliques et substituée par un ou plusieurs des substituants ci-dessus qui peuvent également être fixés aux structures cycliques condensées ; un ou plusieurs desdits radicaux alkyles, cycloalkyles, aryles, aralkyles ou alkaryles et les structures cycliques condensées comportant éventuellement un ou plusieurs hétéroatomes en tant que substituts d'atomes de carbone ou d'hydrogène, ou des deux.

29. Un procédé de polymérisation d'oléfines CH₂ = CHR, où R est un hydrogène ou un radical alkyle comportant 1-6 atomes de carbone ou un radical aryle, ou des mélanges desdites oléfines ou desdites oléfines et dioléfines, ledit procédé étant mis en oeuvre en présence ou non d'un solvant hydrocarboné alphatique ou aromatique, en phase gazeuse, ou en combinant des opérations de polymérisation en phase liquide et en phase gazeuse, en présence d'un catalyseur tel que défini dans les revendications 12 à 16.
